# EUROPEAN PATENT APPLICATION

(11) **EP 4 106 381 A1**
(43) Date of publication of application: **21.12.2022**
(21) Application number: 21754293.5
(22) Date of filing: 29.01.2021
(51) Int. Cl.: H04W 16/14, H04W 72/04

(54) **CHANNEL ALLOCATION DEVICE, CHANNEL ALLOCATION METHOD, AND PROGRAM**

(30) Priority: 10.02.2020 JP 2020020925
(71) Applicant: Sony Group Corporation, Minato-Ku, Tokyo, 108-0075 (JP)
(72) Inventor: FURUICHI Sho, Tokyo 108-0075 (JP)
(74) Representative: Witte, Weller & Partner Patentanwälte mbB
(86) International application number: PCT/JP2021/003229
(87) International publication number: WO 2021/161809

(57) **Abstract**

Provided is an apparatus or the like that allocates a channel in a case where any channel in a specific frequency band is allocated to an identical user in a plurality of areas. A channel allocation apparatus according to one aspect of the present disclosure includes a classification unit and an allocation unit. The classification unit classifies a plurality of areas into one or more first sets on the basis of a relationship among the plurality of areas in which the specific frequency band is available and the number of channels of the specific frequency band used by a user of the specific frequency band in each of the plurality of areas. The allocation unit determines, for each of the first sets, a channel to be allocated to the user in each area included in the first sets.

## Description

### TECHNICAL FIELD

The present disclosure relates to a channel allocation apparatus, a channel allocation method, and a program.

### BACKGROUND ART

Hitherto, due to an increase in wireless environments in which various wireless systems are mixed and an enrichment of content provided wirelessly, a problem of exhaustion of radio resources (for example, the frequency) that can be allocated to the wireless systems has become apparent. Therefore, as means for extracting necessary radio resources, "dynamic spectrum access (DSA)" that utilizes temporal and spatial vacancies (white spaces) among frequency bands that have been allocated to a specific wireless system has rapidly attracted attention.

### CITATION LIST

### NON-PATENT DOCUMENT

Non-Patent Document 1: WINNF (Wireless Innovation Forum),"WINNF-TS-0245","https://winnf.memberclicks.net/assets/CBRS/WINNF-TS-0245.pdf"
Non-Patent Document 2: CBRS Alliance "CBRSA-TS-2001" February 1, 2018 "https://www.cbrsalliance.org/wp-content/uploads/2018/06/CBRSA-TS-2001-V1.0.0.pdf"
Non-Patent Document 3: WINNF,"WINNF-TS-0112","https://winnf.memberclicks.net/assets/CBRS/WINNF-TS-0112.pdf"
Non-Patent Document 4: CEPT ECC, "ECC Report 186 Technical and operational requirements for the operation of white space devices under geo-location approach", January 2013," https://www.ecodocdb.dk/download/124023a2-73ee/ECCREP186.PDF"
Non-Patent Document 5: The National Archives, "The Wireless Telegraphy (White Space Devices) (Exemption) Regulations 2015", http://www.legislation.gov.uk/uksi/2015/2066/contents/mad e
Non-Patent Document 6: WINNF,"WINNF-SSC-0010", https://winnf.memberclicks.net/assets/CBRS/WINNF-SSC-0010.pdf
Non-Patent Document 7: FCC (Federal Communications Commissions), "C.F.R (Code of Federal Regulations) Part 96", https://www.ecfr.gov/cgi-bin/retrieveECFR?gp=&SID=2dd346ae3b51f2866ab6fb907e755526 &mc=true&r=PART&n=pt47.5.96
Non-Patent Document 8: 3GPP (3rd Generation Partnership Project), "TS (Technical Specification)36.104", "https://portal.3gpp.org/desktopmodules/Specifications/Sp ecificationDetails.aspx?specificationId=2412"
Non-Patent Document 9: 3GPP, "TS38.104", https://portal.3gpp.org/desktopmodules/Specifications/Spe cificationDetails.aspx?specificationId=3202
Non-Patent Document 10: ETSI (European Telecommunications Standards Institute), "EN 301 598", https://www.etsi.org/deliver/etsi_en/301500_301599/301598 /01.01.01_60/en_301598v010101p.pdf

### SUMMARY OF THE INVENTION

### PROBLEMS TO BE SOLVED BY THE INVENTION

As a representative example of the dynamic spectrum access, there is the citizens broadband radio service (CBRS) in the United States. Standardization on the CBRS has been conducted in organizations such as the Wireless Innovation Forum (WInnForum) Spectrum Sharing Committee (SSC). However, these organizations define constraints and the like when implementing dynamic spectrum access, but do not define methods and the like for satisfying the constraints in many cases.

For example, in the CBRS, a license for preferentially using dynamic spectrum access such as a priority access license (PAL) is given by an auction for each predetermined area (license area). An administrator of the CBRS needs to allocate a channel to be used by a PAL holder so as to satisfy the regulations of the CBRS. However, a method of allocating a channel is not defined. Therefore, the administrator of the CBRS needs to independently consider channel allocation.

If a channel is allocated for each license area, a problem hardly occurs. However, in the CBRS, in a case where there is a PAL holder who uses a plurality of license areas, it is recommended to allocate a common channel to the PAL holder across the plurality of license areas. Therefore, when the number of license areas increases, calculation for channel allocation becomes complicated, and the burden on the administrator increases.

Therefore, the present disclosure provides an apparatus or the like that allocates a channel in a case where any channel in a specific frequency band is allocated to an identical user in a plurality of areas. As a result, the burden on the administrator or the like who allocates the channel is reduced.

### SOLUTIONS TO PROBLEMS

A channel allocation apparatus according to one aspect of the present disclosure includes a classification unit and an allocation unit. The classification unit classifies a plurality of areas into one or more first sets on the basis of a relationship among the plurality of areas in which the specific frequency band is available and the number of channels of the specific frequency band used by a user of the specific frequency band in each of the plurality of areas. The allocation unit determines, for each of the first sets, a channel to be allocated to the user in each area included in the first sets.

The allocation unit may allocate at least one common channel to each area included in the first sets to the user.

The channel allocation apparatus may be configured such that,
in a case where a minimum value of the number of channels used by the user in each area included in the first sets is equal to or greater than two,
the allocation unit allocates at least two channels common to each area included in the first sets to the user, and
a first common channel and a second common channel which are the common channel are continuous when channels of the specific frequency band are arranged in order of allocated frequency bands.

The channel allocation apparatus may be configured such that
the classification unit further classifies areas included in the first sets into one or more second sets on the basis of at least a minimum value of the number of channels used by the user in the each of the areas included in the first sets, and
the allocation unit determines, for each of the second sets, a channel to be allocated to the user in each of areas included in the second sets.

The channel allocation apparatus may be configured such that
the classification unit further classifies areas included in the first sets into one or more second sets on the basis of at least a minimum value of the number of channels used by the user in the each of the areas included in the first sets, and
the allocation unit allocates, to the user, at least one channel common to areas included in the second sets separately from the channels common to the areas included in the first sets.

The channel allocation apparatus may be configured such that
the classification unit further classifies areas included in the first sets into one or more second sets on the basis of at least a minimum value of the number of channels used by the user in each of the areas included in the first sets,
in a case where a minimum value of the number of channels used by the user in each of areas included in the second sets is two or more, the allocation unit allocates, to the user, at least two channels common to the areas included in the second sets separately from the channels common to the areas included in the first sets, and
a third common channel and a fourth common channel which are the channels common to the areas included in the second sets are continuous when channels of the specific frequency band are arranged in order of allocated frequency bands.

The relationship may be a geographical relationship.

The channel allocation apparatus may be configured such that, in a case where the number of channels of the specific frequency band used by the user is equal to or greater than one in a first area and a second area that are adjacent to each other among the plurality of areas, the classification unit classifies the first area and the second area into the same first set.

The channel allocation apparatus may be configured such that, in a case where a third area and a fourth area among the plurality of areas exist within a predetermined distance and the number of channels of the specific frequency band used by the user is equal to or greater than one in the third area and the fourth area, the classification unit classifies the third area and the fourth area into the same first set.

The channel allocation apparatus may be configured such that the allocation unit acquires or generates an allocation pattern of channels in the plurality of areas on the basis of at least an upper limit value of a total number of users of the specific frequency band in the plurality of areas and an upper limit value of the number of channels available to each user of the specific frequency band in the plurality of areas, and determines a channel to be allocated to the user in areas included in the first sets by narrowing allocation patterns that are available in all of the areas included in the first set.

The channel allocation apparatus may be configured such that, in a case where it is necessary to determine an unavailable channel in the specific frequency band, the allocation unit narrows the allocation pattern by setting the unavailable channel as a channel that is common to the plurality of areas and is continuous when channels of the specific frequency band are arranged in order of allocated frequency bands.

The channel allocation apparatus may be configured such that
the classification unit divides the first sets in which no allocation pattern that is available in all of areas remains into a plurality of pieces, and
the allocation unit determines a channel to be allocated to the user in each of areas included in a divided first set by narrowing allocation patterns that are available in all of the areas included in the divided first set.

The channel allocation apparatus may be configured such that the classification unit detects a fifth area and a sixth area from among areas included in the first sets, the fifth area and the sixth area having a direct relationship but not having an indirect relationship via other areas included in the first sets, and determines areas included in a plurality of first sets after being divided by regarding the fifth area and the sixth area as not having a direct relationship.

In another aspect of the present disclosure,
provided is a channel allocation method including steps of:
classifying a plurality of areas into one or more first sets on the basis of a relationship among the plurality of areas in which a specific frequency band is available and the number of channels of the specific frequency band used by a user of the specific frequency band in each of the plurality of areas; and
determining, for each of the first sets, a channel to be allocated to the user in each of areas included in the first set.

In another aspect of the present disclosure,
provided is a computer program including steps of:
classifying a plurality of areas into one or more first sets on the basis of a relationship among the plurality of areas in which a specific frequency band is available and the number of channels of the specific frequency band used by a user of the specific frequency band in each of the plurality of areas; and
determining, for each of the first sets, a channel to be allocated to the user in each of areas included in the first set.

### BRIEF DESCRIPTION OF DRAWINGS

Fig. 1 is a diagram illustrating a system model according to an embodiment of the present invention.
Fig. 2 is a diagram illustrating a network configuration to which autonomous decision-making can be applied.
Fig. 3 is a diagram illustrating a network configuration to which centralized decision-making can be applied.
Fig. 4 is a diagram illustrating a network configuration in a case where both centralized decision-making and distributed decision-making are applied.
Fig. 5 is a diagram for explaining a three-tier structure in the CBRS.
Fig. 6 is a diagram for explaining a flow of signaling between terminals.
Fig. 7 is a diagram illustrating an example of a license area of a PAL.
Fig. 8 is a diagram showing license areas by nodes.
Fig. 9 is a diagram illustrating nodes connected by edges.
Fig. 10 is a diagram illustrating further classification in a connected set.
Fig. 11 is a diagram illustrating an example of an internal configuration of a channel allocation apparatus.
Fig. 12 is a schematic flowchart of overall processing of the channel allocation apparatus.
Fig. 13 is a schematic flowchart of allocation using a channel allocation pattern.
Fig. 14 is a diagram illustrating a configuration example of a network in which a channel allocation apparatus exists alone.
Fig. 15 is a diagram illustrating a configuration example of a network in a case where channel allocation is performed by the SAS.
Fig. 16 is a diagram illustrating a configuration example of a network including an apparatus that performs only channel allocation.

### MODE FOR CARRYING OUT THE INVENTION

### <<1. Representative possible scenario>>

### <1.1 System model>

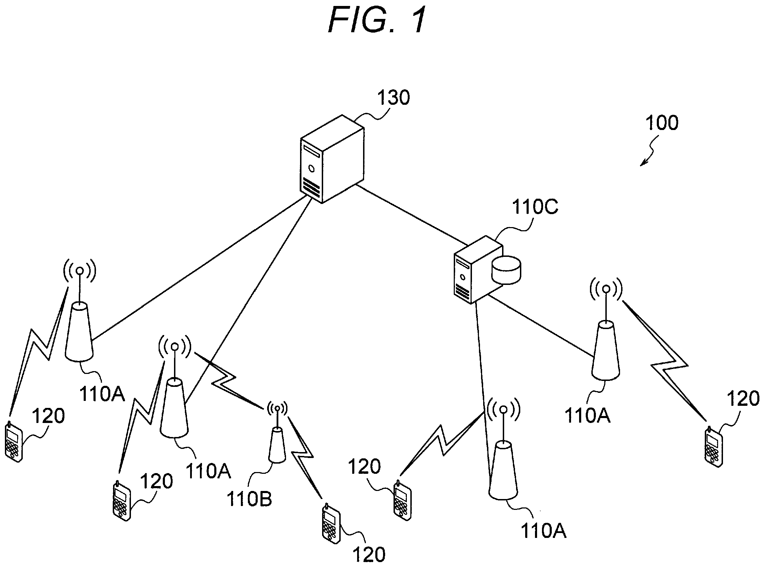

Fig. 1 is a diagram illustrating a system model according to an embodiment of the present invention. As illustrated in Fig. 1, this system model is represented by a communication network 100 including wireless communication, and typically includes the following entities.
- Communication apparatus 110
- Terminal 120
- Communication control apparatus 130

Furthermore, this system model also includes at least a primary system and a secondary system utilizing the communication network 100. The primary system and the secondary system include the communication apparatus 110 or the communication apparatus 110 and the terminal 120. Although various communication systems can be handled as the primary system or the secondary system, in the present embodiment, the primary system is a wireless system that uses a specific frequency band, and the secondary system is a wireless system that shares a part or all of the frequency band. That is, this system model will be described as a model of a wireless communication system related to dynamic spectrum access (DSA). Note that this system model is not limited to a system related to the dynamic spectrum access.

Typically, the communication apparatus 110 is a wireless apparatus that provides a wireless communication service to the terminal 120, such as a wireless base station (base station, Node B, eNB, gNB, or the like) or a wireless access point. That is, the communication apparatus 110 provides a wireless communication service to enable wireless communication of the terminal 120. Furthermore, the communication apparatus 110 may be a wireless relay apparatus or an optical extension apparatus called a remote radio head (RRH). In the following description, unless otherwise noted, the communication apparatus 110 will be described as an entity constituting a secondary system.

The coverage (communication area) provided by the communication apparatus 110 is allowed to have various sizes from a large size such as a macro cell to a small size such as a picocell. Like a distributed antenna system (DAS), a plurality of communication apparatuses 110 may form one cell. Furthermore, in a case where the communication apparatus 110 has a beamforming capability, a cell or a service area may be formed for each beam.

In the present disclosure, it is assumed that there are two different types of communication apparatuses 110.

In the present disclosure, a communication apparatus 110 that can access a communication control apparatus 130 without using a wireless path that requires permission of the communication control apparatus 130 is referred to as a "communication apparatus 110A". Specifically, for example, the communication apparatus 110 capable of wired Internet connection can be regarded as a "communication apparatus 110A". Furthermore, for example, even in a wireless relay apparatus that does not have a wired Internet connection function, if a wireless backhaul link using a frequency that does not require permission of the communication control apparatus 130 is constructed with another communication apparatus 110A, such a wireless relay apparatus may also be regarded as the "communication apparatus 110A".

In the present disclosure, a communication apparatus 110 that cannot access the communication control apparatus 130 without a wireless path that requires permission of the communication control apparatus 130 is referred to as a "communication apparatus 110B". For example, a wireless relay apparatus that needs to construct a backhaul link using a frequency that requires permission of the communication control apparatus 130 can be regarded as a "communication apparatus 110B". Furthermore, for example, an apparatus such as a smartphone having a wireless network provision function typified by tethering and using a frequency that requires permission of the communication control apparatus 130 in both the backhaul link and the access link may be treated as the "communication apparatus 110B".

The communication apparatus 110 is not necessarily fixedly installed. For example, the communication apparatus 110 may be installed in a moving object such as an automobile. Furthermore, the communication apparatus 110 does not necessarily need to exist on the ground. For example, the communication apparatus 110 may be included in an object existing in the air or space, such as an aircraft, a drone, a helicopter, a high altitude platform station (HAPS), a balloon, or a satellite. Furthermore, for example, the communication apparatus 110 may be included in an object existing on the sea or under the sea, such as a ship or a submarine. Typically, such a mobile communication apparatus 110 corresponds to the communication apparatus 110B, and performs wireless communication with the communication apparatus 110A to secure an access path to the communication control apparatus 130. As a matter of course, even the mobile communication apparatus 110 can be handled as the communication apparatus 110A as long as the frequency used in the wireless communication with the communication apparatus 110A is not managed by the communication control apparatus 130.

In the present disclosure, unless otherwise specified, the description "communication apparatus 110" includes both meanings of the communication apparatus 110A and the communication apparatus 110B, and may be replaced with either one.

The communication apparatus 110 can be used, operated, or managed by various operators. For example, a mobile network operator (MNO), a mobile virtual network operator (MVNO), a mobile network enabler (MNE), a mobile virtual network enabler (MVNE), a shared facility operator, a neutral host network (NHN) operator, a broadcaster, an enterprise, an educational institution (educational corporations, boards of education of local governments, or the like), a real estate (building, apartment, or the like) administrator, an individual, and the like can be assumed as operators related to the communication apparatus 110. Note that the company related to the communication apparatus 110 is not particularly limited. Furthermore, the communication apparatus 110A may be a shared facility used by a plurality of carriers. Furthermore, different companies may perform installation, use, and management of a facility.

The communication apparatus 110 operated by a company is typically connected to the Internet via a core network. Furthermore, operation, management, and maintenance are performed by a function called Operation, Administration & Maintenance (OA & M). Furthermore, for example, as illustrated in Fig. 1, there may be an intermediate apparatus (network manager) 110C that integrally controls the communication apparatus 110 in the network. Note that the intermediate apparatus may be the communication apparatus 110 or the communication control apparatus 130.

The terminal 120 (user equipment, user terminal, user station, mobile terminal, mobile station, and the like) is an apparatus that performs wireless communication by a wireless communication service provided by the communication apparatus 110. Typically, a communication apparatus such as a smartphone corresponds to the terminal 120. Note that an apparatus having a wireless communication function can correspond to the terminal 120. For example, a device such as a business camera having a wireless communication function can also correspond to the terminal 120 even if the wireless communication is not a main application. Furthermore, a communication device that transmits data to the terminal 120, such as a broadcasting field pickup unit (FPU) that transmits an image for television broadcasting or the like from a broadcast station (site) to the broadcast station in order to perform sports broadcasting or the like, also corresponds to the terminal 120. Furthermore, the terminal 120 is not necessarily used by a person. For example, like so-called machine type communication (MTC), a device such as a factory machine or a sensor installed in a building may be network-connected to operate as the terminal 120. Furthermore, a device called customer premises equipment (CPE) provided to ensure Internet connection may behave as the terminal 120.

Furthermore, as represented by device-to-device (D2D) and vehicle-to-everything (V2X), the terminal 120 may include a relay communication function.

Furthermore, as similar to the communication apparatus 110, the terminal 120 does not need to be fixedly installed or exist on the ground. For example, an object existing in the air or space, such as an aircraft, a drone, a helicopter, a satellite, or the like, may operate as the terminal 120. Furthermore, for example, an object existing on the sea or under the sea, such as a ship or a submarine, may operate as the terminal 120.

In the present disclosure, unless otherwise noted, the terminal 120 corresponds to an entity that terminates a wireless link using a frequency that requires permission of the communication control apparatus 130. However, depending on a function included in the terminal 120 or an applied network topology, the terminal 120 can perform an operation equivalent to that of the communication apparatus 110. In other words, depending on the network topology, an apparatus that can correspond to the communication apparatus 110 such as a wireless access point may correspond to the terminal 120, or an apparatus that can correspond to the terminal 120 such as a smartphone may correspond to the communication apparatus 110.

The communication control apparatus 130 is typically an apparatus that determines, permits, instructs, and/or manages communication parameters of the communication apparatus 110. For example, database servers called TV white space database (TVWSDB), geolocation database (GLDB), spectrum access system (SAS), and automated frequency coordination (AFC) correspond to the communication control apparatus 130. Furthermore, for example, a control apparatus that performs radio wave interference control between apparatuses defined by standards represented by EN 303 387 of European Telecommunications Standards Institute (ETSI), Institute of Electrical and Electronics Engineers (IEEE) 802.19.1-2018, CBRSA-TS -2001, and the like also corresponds to the communication control apparatus 130. Furthermore, for example, a registered location secure server (RLSS) defined in IEEE 802.11-2016 also corresponds to the communication control apparatus 130. That is, not limited to these examples, an entity responsible for determination, use permission, instruction, management, and the like of the communication parameters of the communication apparatus 110 may be referred to as the communication control apparatus 130. Basically, the control target of the communication control apparatus 130 is the communication apparatus 110, but the communication control apparatus 130 may control the terminal 120 under the control of the communication apparatus 110.

There may be a plurality of communication control apparatuses 130. In a case where there is a plurality of communication control apparatuses 130, at least one of at least the following three types of decision-making topologies can be applied to the communication control apparatus 130.
- Autonomous decision-making
- Centralized decision-making
- Distributed decision-making

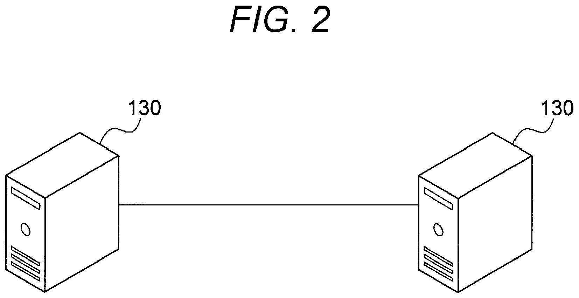

Autonomous decision-making is a decision-making topology in which an entity (decision-making entity, here the communication control apparatus 130) that makes a decision makes a decision independently from another decision-making entity. The communication control apparatus 130 independently calculates necessary frequency allocation and interference control. For example, in a case where a plurality of communication control apparatuses 130 is arranged in a distributed manner as illustrated in Fig. 2, autonomous decision-making can be applied.

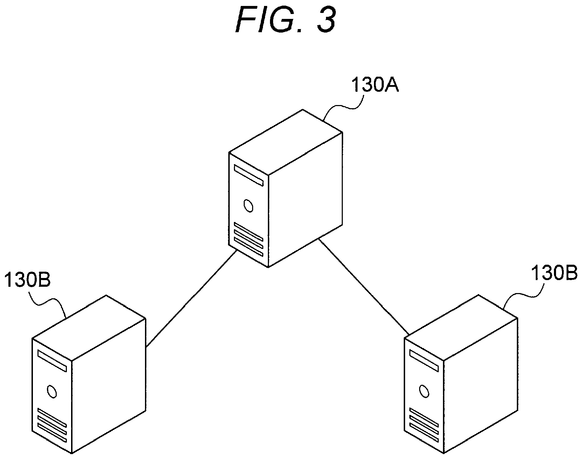

Centralized decision-making is a decision-making topology in which a decision-making entity delegates decision making to another decision-making entity. In a case where centralized decision-making is performed, for example, a model as illustrated in Fig. 3 is assumed. Fig. 3 illustrates a model (so-called master-slave type) in which one communication control apparatus 130 centrally controls a plurality of communication control apparatuses 130. In the model of Fig. 3, the communication control apparatus 130A, which is the master, can control communication control apparatuses 130B, which are the plurality of slaves, to intensively make decisions.

Distributed decision-making is a decision-making topology in which a decision-making entity makes a decision in cooperation with another decision-making entity. For example, although a plurality of communication control apparatuses 130 independently makes a decision as in autonomous decision-making in Fig. 2, mutual adjustment of decision making results, negotiation, and the like performed by each communication control apparatus 130 after making a decision may correspond to "distributed decision-making". Furthermore, for example, in the centralized decision-making in Fig. 3, for the purpose of load balancing or the like, dynamic delegation or discarding of the decision-making authority to the slave communication control apparatus 130B by the master communication control apparatus 130A can also be regarded as "distributed decision-making".

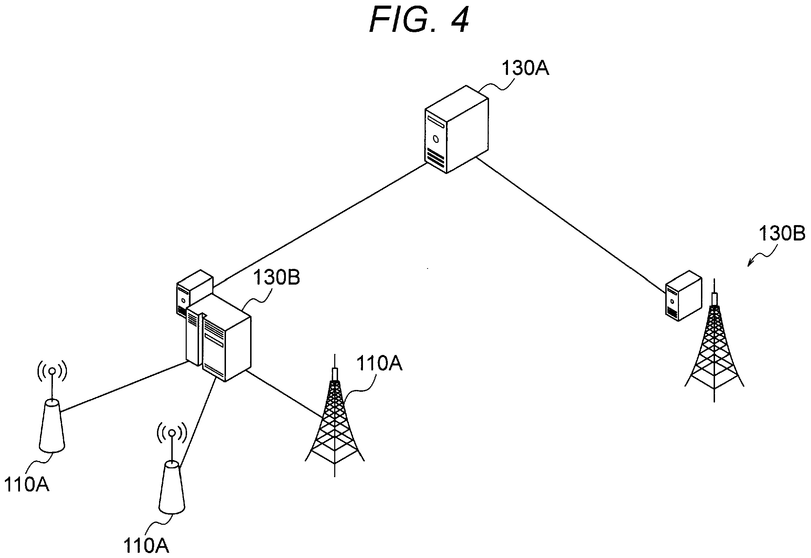

Both centralized decision-making and distributed decision-making may be applied. In Fig. 4, the slave communication control apparatus 130B operates as an intermediate apparatus that bundles the plurality of communication apparatuses 110. The master communication control apparatus 130A may not control the communication apparatus 110 bundled by the slave communication control apparatus 130B, that is, the secondary system configured by the slave communication control apparatus 130B. As described above, as a modification, implementation as illustrated in Fig. 4 is also possible.

The communication control apparatus 130 may also acquire necessary information from entities other than the communication apparatus 110 and the terminal 120 of the communication network 100 for its role. Specifically, for example, information necessary for protecting the primary system can be acquired from a database (regulatory database) managed or operated by a national regulatory authority (NRA) of a country or a region. Examples of the regulatory database include the Universal Licensing System (ULS) operated by the Federal Communications Commissions (FCC). Examples of information necessary for protecting the primary system include, for example, primary system position information, primary system communication parameters, out-of-band emission (OOBE) limit, adjacent channel leakage ratio (ACLR), adjacent channel selectivity, fading margin, protection ratio (PR), and the like. In an area where a fixed numerical value, an acquisition method, a derivation method, and the like are defined by a law or the like in order to protect the primary system, it is desirable to use information defined by the law as information necessary for protecting the primary system.

Furthermore, a database that records the communication apparatus 110 and the terminal 120 that have been subjected to conformity authentication, such as an equipment authorization system (EAS) managed by an office of engineering and technology (OET) of the FCC, also corresponds to the regulatory database. From such a regulatory database, information regarding the operable frequency of the communication apparatus 110 and the terminal 120, information regarding the maximum EIRP, and the like can be acquired. Naturally, the communication control apparatus 130 may use these pieces of information for protecting the primary system.

Furthermore, it is also conceivable that the communication control apparatus 130 acquires radio wave sensing information from a radio wave sensing system installed and operated for the purpose of radio wave detection in the primary system. As a specific example, in the citizens broadband radio service (CBRS) in the United States, the communication control apparatus 130 acquires radio wave detection information of a marine radar as a primary system from a radio wave sensing system called an environmental sensing capability (ESC). Furthermore, in a case where the communication apparatus 110 and the terminal 120 have a sensing function, the communication control apparatus 130 may acquire radio wave detection information of the primary system from these.

The interface between the entities constituting this system model may be wired or wireless. For example, not only a wired line but also a wireless interface that does not depend on frequency sharing may be used as an interface between the communication control apparatus 130 and the communication apparatus 110. Examples of the wireless interface that does not depend on frequency sharing include, for example, a wireless communication line provided by a mobile communication carrier via a licensed band and Wi-Fi communication using an existing license-exempt band.

### <1.2 Terms related to frequency and spectrum access>

As described above, the present embodiment will be described assuming a dynamic spectrum access environment. As a representative example of dynamic spectrum access, a mechanism defined in the CBRS of the United States (that is, a mechanism defined in Part 96 Citizens Broadband Radio Service of the FCC rules in the United States) will be described.

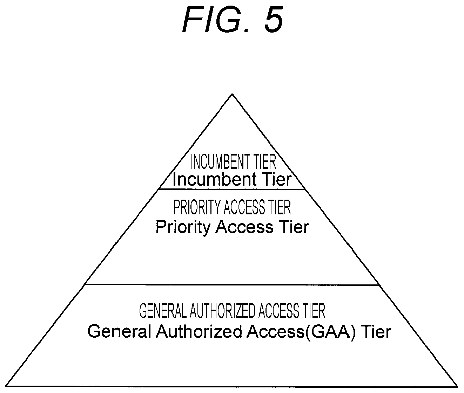

In the CBRS, as illustrated in Fig. 5, each of users in the shared frequency band is classified into one of three groups. This group is called tier. The three groups are referred to as an incumbent tier, a priority access tier, and a general authorized access (GAA) tier, respectively.

The Incumbent Tier is a group including existing users who conventionally use a frequency band defined as a shared frequency band. The existing user is also generally referred to as a primary user. In the CBRS, the Department of Defense (DOD), fixed satellite operators, and Grandfathered Wireless Broadband Licensee (GWBL) in the United States are defined as existing users. The Incumbent Tier is not required to avoid interference to the Priority Access Tier and the GAA Tier with lower priorities or to suppress utilization of the shared frequency band. Furthermore, the Incumbent Tier is protected from interference by the Priority Access Tier and the GAA Tier. That is, the users of the Incumbent Tier can use the shared frequency band without considering the existence of other groups.

The Priority Access Tier is a group of users who use the shared frequency band on the basis of the above-described Priority Access License (PAL). A user of the Priority Access Tier is also generally referred to as a secondary user. When the shared frequency band is used, the Priority Access Tier is required to avoid interference and to suppress the use of the shared frequency band for the Incumbent Tier having a higher priority than the Priority Access Tier. On the other hand, neither interference avoidance nor suppression of use of the shared frequency band is required for the GAA tier having a lower priority than the Priority Access Tier. Furthermore, the Priority Access Tier is not protected from interference by the Incumbent Tier with a higher priority, but is protected from interference by the GAA Tier with a lower priority.

The GAA tier is a group including shared frequency band users that do not belong to the Incumbent Tier and the Priority Access Tier. As similar to the Priority Access Tier, a user of the GAA Tier is also generally referred to as a secondary user. However, since the priority of shared use is lower than that of the Priority Access Tier, it is also referred to as a low priority secondary user. When the shared frequency band is used, the GAA Tier is required to avoid interference and to suppress the use of the shared frequency band for the Incumbent Tier and the Priority Access Tier having a higher priority than the GAA Tier. Furthermore, the GAA Tier is not protected from interference by the Incumbent Tier and the Priority Access Tier. That is, the GAA tier is a tier that is required to use an opportunistic shared frequency band in law.

Although the CBRS mechanism has been described above as a representative example of dynamic spectrum access, the present embodiment is not limited to the definition of CBRS. For example, as illustrated in Fig. 5, the CBRS generally adopts a three-tier structure, but a two-tier structure may be adopted in the present embodiment. Typical examples of the two-tier structure include authorized shared access (ASA), licensed shared access (LSA), evolved LSAs (eLSAs), and TV band white space (TVWS). In the ASA, the LSA, and the eLSA, there is no GAA Tier, and a structure equivalent to a combination of the Incumbent Tier and the Priority Access Tier is adopted. Furthermore, in the TVWS, there is no Priority Access Tier, and a structure equivalent to a combination of the Incumbent Tier and the GAA Tier is adopted. Furthermore, there may be four or more tiers. Specifically, for example, four or more tiers may be generated by providing a plurality of intermediate tiers corresponding to the Priority Access Tiers and imparting different priorities to the intermediate tiers. Furthermore, for example, the tiers may be increased by similarly dividing the GAA tier and imparting priorities. That is, each group may be divided.

Furthermore, the primary system of the present embodiment is not limited to the definition of the CBRS. For example, as an example of the primary system, a wireless system such as TV broadcasting, a fixed microwave line (FS: Fixed System), a meteorological radar, a radio altimeter, a communications-based train control, and a radio astronomy is assumed, and any wireless system can be the primary system of the present embodiment without being limited thereto.

Furthermore, as described above, the present embodiment is not limited to the environment of frequency sharing. In general, in frequency sharing or frequency secondary utilization, an existing system that uses a target frequency band is referred to as a primary system, and a secondary user is referred to as a secondary system. In a case where the present embodiment is applied to an environment other than a frequency sharing environment, the system should be read by replacing the system with another term. For example, a macrocell base station in a heterogeneous network (HetNet) may be a primary system, and a small cell base station or a relay station may be a secondary system. Furthermore, the base station may be a primary system, and a relay user equipment (UE) or a vehicle UE that implements D2D or V2X existing in the coverage of the base station may be a secondary system. The base station is not limited to a fixed type, and may be a portable type or a mobile type. In such a case, for example, the communication control apparatus 130 of the present embodiment may be included in a core network, a base station, a relay station, a relay UE, or the like.

Furthermore, in a case where the present embodiment is applied to an environment other than the frequency shared environment, the term "frequency" in the present disclosure is replaced with another term shared by the application destination. For example, terms such as "resource", "resource block", "resource element", "resource pool", "channel", "component carrier", "carrier", "subcarrier", and "Bandwidth Part (BWP)" or another term having a meaning equivalent or similar thereto are assumed to be used.

### <<2. Description of various procedures assumed in the present embodiment>>

Here, a basic procedure that can be used in the implementation of the present embodiment will be described. Note that up to <2.5> described later will be described on the assumption that the procedure is mainly performed in the communication apparatus 110A.

### <2.1 Registration procedure>

The registration procedure is a procedure for registering information of a wireless system that attempts to use the shared frequency band. More specifically, it is a procedure for registering a device parameter related to the communication apparatus 110 of the wireless system in the communication control apparatus 130. Typically, a registration procedure is started when the communication apparatus 110 representing a wireless system that attempts to use the shared frequency band notifies the communication control apparatus 130 of a registration request including a device parameter. Note that, in a case where a plurality of communication apparatuses 110 belongs to a wireless system that attempts to use the shared frequency band, the device parameter of each of the plurality of communication apparatuses is included in the registration request. Furthermore, an apparatus that transmits the registration request as a representative of the wireless system may be appropriately determined.

### <2.1.1 Details of required parameters>

The device parameter refers to, for example, the following information.
- Information regarding the user of the communication apparatus 110 (hereinafter, referred to as user information)
- Information unique to the communication apparatus 110 (hereinafter, referred to as unique information)
- Information regarding the position of the communication apparatus 110 (hereinafter, referred to as position information)
- Information regarding an antenna included in the communication apparatus 110 (hereinafter, referred to as antenna information)
- Information regarding a wireless interface included in the communication apparatus 110 (hereinafter, referred to as wireless interface information)
- Legal information regarding communication apparatus 110 (hereinafter, referred to as legal information)
- Information regarding an installer of the communication apparatus 110 (hereinafter, referred to as installer information)
- Information regarding the group to which the communication apparatus 110 belongs (hereinafter, group information)

The device parameter is not limited to the above. Information other than these may be treated as device parameters. Note that the device parameter does not need to be transmitted once, and may be transmitted a plurality of times. That is, a plurality of registration requests may be transmitted for one registration procedure. In this manner, one procedure or one process in one procedure may be performed by being divided into a plurality of times of procedures or processes. This is similar for the procedure described below.

The user information is information related to the user of the communication apparatus 110. For example, a user ID, an account name, a user name, a user contact, a call sign, and the like can be assumed. The user ID and the account name may be independently generated by the user of the communication apparatus 110 or may be issued in advance by the communication control apparatus 130. As the call sign, it is desirable to use a call sign issued by an NRA.

The user information can be used, for example, for interference resolution. As a specific example, in the frequency use notification procedure described in <2.5> to be described later, even if the communication control apparatus 130 makes the use stop determination on the frequency being used by the communication apparatus 110 and gives an instruction based on the use stop determination, there may be a case where the frequency use notification request of the frequency is continuously notified. In that case, the communication control apparatus 130 can notify the user contact address included in the user information of the behavior confirmation request of the communication apparatus 110 while suspicious of a failure of the communication apparatus 110. Not limited to this example, in a case where it is determined that the communication apparatus 110 is performing an operation against the communication control performed by the communication control apparatus 130, the communication control apparatus 130 can make a contact using the user information.

The unique information is information that can specify the communication apparatus 110, product information of the communication apparatus 110, information regarding hardware or software of the communication apparatus 110, and the like.

The information that can specify the communication apparatus 110 can include, for example, a manufacturing number (serial number) of the communication apparatus 110, an ID of the communication apparatus 110, and the like. The ID of the communication apparatus 110 may be uniquely imparted by the user of the communication apparatus 110, for example.

The product information of the communication apparatus 110 may include, for example, an authentication ID, a product model number, information regarding a manufacturer, and the like. The authentication ID is, for example, an ID given from a certificate authority in each country or region, such as an FCC ID in the United States, a CE number in Europe, and a technical standard conformity certificate (technical standard) in Japan. An ID issued by an industry association or the like on the basis of a unique authentication program may also be regarded as the authentication ID.

The unique information represented by these can be used, for example, in the application of a whitelist or a blacklist. For example, in a case where any piece of information regarding the communication apparatus 110 in operation is included in the blacklist, the communication control apparatus 130 can instruct the communication apparatus 110 to stop using the frequency in the frequency use notification procedure described in <2.5> described later. Moreover, the communication control apparatus 130 can take a behavior of not canceling the usage stop measure until the communication apparatus 110 is cancelled from the blacklist. Furthermore, for example, the communication control apparatus 130 can reject registration of the communication apparatus 110 included in the blacklist. Furthermore, for example, the communication control apparatus 130 can also perform an operation of not considering the communication apparatus 110 corresponding to the information included in the blacklist in the interference calculation of the present disclosure or considering only the communication apparatus 110 corresponding to the information included in the whitelist in the interference calculation.

The information regarding the hardware of the communication apparatus 110 may include, for example, transmission power class information. For example, in FCC Code of Federal Regulations (C.F.R) Part 96 of the United States, two types of classes, Category A and Category B, are defined as the transmission power class information, and the information regarding the hardware of the communication apparatus 110 conforming to the definition can include information indicating which of the two types of classes the information belongs to. Furthermore, in Technical Specification (TS) 36.104 and TS 38.104 of 3rd Generation Partnership Project (3GPP), some classes of eNodeB and gNodeB are defined, and these definitions can also be used.

The transmission power class information may be used, for example, in an application of interference calculation. The interference calculation can be performed using the maximum transmission power defined for each class as the transmission power of the communication apparatus 110.

The information regarding the software of the communication apparatus 110 can include, for example, version information, a build number, and the like regarding an execution program in which processing necessary for interaction with the communication control apparatus 130 is described. Furthermore, the information regarding the software of the communication apparatus 110 may include version information, a build number, and the like of software for operating as the communication apparatus 110.

The position information is typically information capable of specifying the position of the communication apparatus 110. For example, the position information is coordinate information acquired by a positioning function represented by a global positioning system (GPS), Beidou, a quasi-zenith satellite system (QZSS), Galileo, or an assisted global positioning system (A-GPS). Typically, information related to latitude, longitude, ground level/sea level, altitude, and positioning error may be included. Alternatively, for example, the position information may be position information registered in an information management apparatus managed by a National Regulatory Authority (NRA) or its agency. Alternatively, for example, coordinates of an X axis, a Y axis, and a Z axis with a specific geographical position as an origin may be used. Furthermore, together with such coordinate information, an identifier indicating whether the communication apparatus 110 exists outdoors or indoors may be given.

Furthermore, the position information may be information indicating an area in which the communication apparatus 110 is located. For example, information indicating an area determined by the government, such as a postal code or an address, may be used. Furthermore, for example, the area may be indicated by a set of three or more geographic coordinates. The information indicating these regions may be provided together with the coordinate information.

Furthermore, in a case where the communication apparatus 110 is located indoors, information indicating a floor of a building where the communication apparatus 110 is located can also be included in the position information. For example, an identifier indicating the number of floors, the ground, or the underground may be included in the position information. Furthermore, for example, information indicating a further closed space inside a building, such as a room number and a room name in the building, can be included in the position information.

Typically, the positioning function is desirably provided by the communication apparatus 110. However, the performance of the location positioning function may not meet the required accuracy. Furthermore, even if the performance of the positioning function satisfies the required accuracy, the position information that satisfies the required accuracy may not necessarily be acquired depending on the installation position of the communication apparatus 110. Therefore, an apparatus different from the communication apparatus 110 may include the positioning function, and the communication apparatus 110 may acquire information related to the position from the apparatus. The apparatus having the positioning function may be an available existing apparatus, or may be provided by an installer of the communication apparatus 110. In such a case, it is desirable that the position information measured by the installer of the communication apparatus 110 is written in the communication apparatus 110.

The antenna information is typically information indicating performance, a configuration, and the like of an antenna included in the communication apparatus 110. Typically, for example, the antenna information may include information such as an antenna installation height, a tilt angle (downtilt), a horizontal orientation (azimuth), a boresight, an antenna peak gain, and an antenna model.

Furthermore, the antenna information may also include information regarding a formable beam. For example, the antenna information may include information such as a beam width, a beam pattern, and an analog or digital beamforming capability.

Furthermore, the antenna information may also include information regarding performance and configuration of Multiple Input Multiple Output (MIMO) communication. For example, the antenna information may include information such as the number of antenna elements and the maximum number of spatial streams. Furthermore, the antenna information may include codebook information to be used, weight matrix information, and the like. The weight matrix information includes a unitary matrix, a Zero-Forcing (ZF) matrix, a Minimum Mean Square Error (MMSE) matrix, and the like, which are obtained by Singular Value Decomposition (SVD), Eigen Value Decomposition (EVD), Block Diagonalization (BD), and the like. Furthermore, in a case where the communication apparatus 110 includes a function such as maximum likelihood detection (MLD) that requires nonlinear calculation, information indicating the included function may be included in the antenna information.

Furthermore, the antenna information may include Zenith of Direction, Departure (ZoD). The ZoD is a type of radio wave arrival angle. Note that, instead of being notified from the communication apparatus 110, the ZoD may be estimated and notified by another communication apparatus 110 from radio waves radiated from the antenna of the communication apparatus 110. In this case, the communication apparatus 110 may be an apparatus that operates as a base station or an access point, an apparatus that performs D2D communication, a moving relay base station, or the like. The ZoD may be estimated by a radio wave direction of arrival estimation technology such as Multiple Signal Classification (MUSIC) or Estimation of Signal Propagation via Rotation Invariance Techniques (ESPRIT). Furthermore, the ZoD can be used by the communication control apparatus 130 as measurement information.

The wireless interface information is typically information indicating a wireless interface technology included in the communication apparatus 110. For example, identifier information indicating a technology used in GSM, CDMA 2000, UMTS, E-UTRA, E-UTRA NB-IoT, 5G NR, 5G NR NB-IoT or a further next generation cellular system may be included as the wireless interface information. Furthermore, identifier information indicating a derivative technology based on Long Term Evolution (LTE)/5G such as MulteFire, Long Term Evolution-Unlicensed (LTE-U), or NR-Unlicensed (NR-U) may be included. Furthermore, identifier information indicating a standard technology such as a metropolitan area network (MAN) such as WiMAX or WiMAX2+ or a wireless LAN of the IEEE 802.11 series may also be included. Furthermore, the wireless interface information may be identifier information indicating an Extended Global Platform (XGP) or a Shared XGP (sXGP). The wireless interface information may be identifier information of a communications technology for Local Power, Wide Area (LPWA). Furthermore, the wireless interface information may include identifier information indicating a proprietary wireless technology. Furthermore, a version number or a release number of the technical specification that defines these technologies may also be included as the wireless interface information.

Furthermore, the wireless interface information may also include information regarding a frequency band supported by the communication apparatus 110. For example, the information regarding the frequency band may be represented by an upper limit frequency, a lower limit frequency, a center frequency, a bandwidth, a 3GPP Operating Band number, or a combination of at least two of these. Furthermore, one or more pieces of information regarding the frequency band may be included in the wireless interface information.

The information regarding the frequency band supported by the communication apparatus 110 may further include information indicating capability of a band extension technology such as carrier aggregation (CA) or channel bonding. For example, combinable band information or the like may be included. Furthermore, the carrier aggregation may also include information regarding a band to be used as a primary component carrier (PCC) or a secondary component carrier (SCC). Furthermore, the carrier aggregation may also include the number of component carriers (the number of CCs) that can be aggregated at the same time.

The information regarding the frequency band supported by the communication apparatus 110 may further include information indicating a combination of frequency bands supported by the dual connectivity and the multi connectivity. In addition, information of another communication apparatus 110 that cooperatively provides the dual connectivity and the multi connectivity may also be provided. The communication control apparatus 130 may determine the communication control disclosed in the present embodiment in consideration of another communication apparatus 110 having a cooperative relationship or the like in the subsequent procedures.

The information regarding the frequency band supported by the communication apparatus 110 may also include information indicating radio wave use priority such as PAL and GAA.

Furthermore, the wireless interface information may also include information regarding a modulation scheme supported by the communication apparatus 110. For example, as a representative example, the information regarding the modulation scheme may include information indicating a primary modulation scheme such as frequency shift keying (FSK), n-value phase shift keying (PSK, where n is a multiplier of 2, such as 2, 4, or 8, and n-value quadrature amplitude modulation (QAM, where n is a multiplier of 4, such as 4, 16, 64, 256, or 1024). Furthermore, the information regarding the modulation scheme may include information indicating a secondary modulation scheme such as orthogonal frequency division multiplexing (OFDM), scalable OFDM, DFT spread OFDM (DFT-s-OFDM), generalized frequency division multiplexing (GFDM), and filter bank multi carrier (FBMC).

Furthermore, the wireless interface information may also include information regarding an error correction code. For example, capabilities such as a turbo code, a low density parity check (LDPC) code, a polar code, and an erasure correction code, and coding rate information to be applied can be included.

The modulation scheme information and the information regarding the error correction code can also be represented by a modulation and coding scheme (MCS) index as another mode.

Furthermore, the wireless interface information may also include information indicating a function specific to each wireless technical specification supported by the communication apparatus 110. For example, as a representative example, there is transmission mode (TM) information defined in LTE. In addition, those having two or more modes for a specific function may be included in the wireless interface information as similar to the TM information. Furthermore, in the technical specification, in a case where the communication apparatus 110 supports a function that is not essential in the specification even if there are not two or more modes, information indicating the supported function may also be included.

Furthermore, the wireless interface information may also include radio access technology (RAT) information supported by the communication apparatus 110. For example, the wireless interface information may include information indicating time division multiple access (TDMA), frequency division multiple access (FDMA), orthogonal frequency division multiple access (OFDMA), power division multiple access (PDMA), code division multiple access (CDMA), sparse code multiple access (SCMA), interleave division multiple access (IDMA), spatial division multiple access (SDMA), carrier sense multiple access/collision avoidance (CSMA/CA), carrier sense multiple access/collision detection (CSMA/CD), or the like. Note that the TDMA, FDMA, and OFDMA are classified into orthogonal multiple access (OMA). The PDMA, CDMA, SCMA, IDMA, and SDMA are classified into non orthogonal multiple access (NOMA). A representative example of the PDMA is a method implemented by a combination of superposition coding (SPC) and successive interference canceller (SIC). The CSMA/CA and CSMA/CD are classified into opportunistic access.

In a case where the wireless interface information includes information indicating an opportunistic access, information indicating details of the access method may be further included. As a specific example, information indicating whether it is frame based equipment (FBE) or load based equipment (LBE) defined in EN 301 598 of ETSI may be included.

In a case where the wireless interface information indicates the LBE, LBE-specific information such as a priority class specified in EN 301 598 of ETSI may further be included.

Furthermore, the wireless interface information may also include information regarding a duplex mode supported by the communication apparatus 110. As a representative example, information regarding a method such as frequency division duplex (FDD), time division duplex (TDD), or full duplex (FD) may be included.

In a case where the TDD is included as the wireless interface information, information regarding TDD frame structure used or supported by the communication apparatus 110 may be added. Furthermore, information related to the duplex mode may be included for each frequency band indicated by the frequency band information.

In a case where the FD is included as the wireless interface information, information regarding an interference power detection level may be included.

Furthermore, the wireless interface information may also include information regarding a transmission diversity method supported by the communication apparatus 110. For example, space time coding (STC) or the like may be included.

Furthermore, the wireless interface information may also include guard band information. For example, the wireless interface may include information regarding a predetermined guard band size. Alternatively, for example, the wireless interface information may include information regarding a guard band size desired by the communication apparatus 110.

Regardless of the mode described above, the wireless interface information may be provided for each frequency band.

The legal information is typically information regarding regulations that the communication apparatus 110 must comply with, defined by a radio administration agency or an equivalent agency in each country or region, authentication information acquired by the communication apparatus 110, or the like. Typically, the information regarding the regulation may include, for example, upper limit value information of out-of-band radiation, information regarding a blocking characteristic of the receiver, and the like. Typically, the authentication information may include, for example, type approval information, legal and regulatory information serving as a reference of authentication acquisition, and the like. The type authentication information corresponds to, for example, FCC ID of the United States, technical standard conformity certification of Japan, and the like. The legal and regulatory information corresponds to, for example, an FCC rule number of the United States, an ETSI Harmonized Standard number of Europe, and the like.

Among the legal information, regarding numerical values, those defined in the specification of the wireless interface technology may be substituted. The specification of the wireless interface technology corresponds to, for example, 3GPP TS 36.104 or TS 38.104. Adjacent channel leakage ratio (ACLR) is defined therein. Instead of the upper limit value information of the out-of-band radiation, the upper limit value of the out-of-band radiation may be derived and used using the ACLR defined in the specification. Furthermore, the ACLR itself may be used as necessary. Furthermore, adjacent channel selectivity (ACS) may be used instead of the blocking characteristic. Furthermore, these may be used in combination, or an adjacent channel interference ratio (ACIR) may be used. Note that, in general, the ACIR has the following relationship with the ACLR and the ACS.
[Math. 1] $ACIR = {\left(\frac{1}{ACS}+\frac{1}{ACLR}\right)}^{- 1}$

Note that, although Equation (1) uses true value expression, Equation (1) may be expressed by logarithmic expression.

The installer information may include information capable of specifying a person (installer) who installs the communication apparatus 110, unique information associated with the installer, and the like. As a representative example, the installer information may include information regarding a person who is responsible for the position information of the communication apparatus 110 called a certified professional installer (CPI) defined in Non-Patent Document 3. The CPI discloses certified professional installer Registration ID (CPIR-ID) and CPI name. Furthermore, as unique information associated with the CPI, for example, an address for contact (mailing address or contact address), an e-mail address, a telephone number, a public key identifier (PKI), and the like are disclosed. The installer information is not limited thereto, and other information related to the installer may be included in the installer information as necessary.

The group information may include information regarding the communication apparatus group to which the communication apparatus 110 belongs. Specifically, for example, information related to the same or equivalent type of group as disclosed in WINNF-SSC-0010 may be included. Furthermore, for example, in a case where the communication carrier manages the communication apparatuses 110 in units of groups according to its own operation policy, information regarding the groups may be included in the group information.

The information listed so far may be estimated from other information provided from the communication apparatus 110 to the communication control apparatus 130 without the communication apparatus 110 providing the information to the communication control apparatus 130. Specifically, for example, the guard band information can be estimated from the wireless interface information. In a case where the wireless interface used by the communication apparatus 110 is E-UTRA or 5G NR, the guard band can be estimated on the basis of the E-UTRA transmission bandwidth specification described in TS36.104 of 3GPP, the 5G NR transmission bandwidth specification described in TS38.104 of 3GPP, and a table described in TS38.104 described below.

**[Table 1]**

| **Table 5.6-1 Transmission bandwidth configuration NRB in E-UTRA channel bandwidths** (Cited from Table 5.6-1 of TS 36.104 of 3GPP) | | | | | | |
|---|---|---|---|---|---|---|
| **Channel bandwidth BW_{Channel} [MHz]** | **1.4** | **3** | **5** | **10** | **15** | **20** |
| **Transmission bandwidth configuration N_{RB}** | **6** | **15** | **25** | **50** | **75** | **100** |

**[Table 2]**

| **Table 5.3.3-1: Minimum guardband (kHz) (FR1)** (Cited from Table 5.3.3-1 of TS 38.104 of 3GPP) | | | | | | | | | | | | | |
|---|---|---|---|---|---|---|---|---|---|---|---|---|---|
| **SCS (kHz)** | **5 MHz** | **10 MHz** | **15 MHz** | **20 MHz** | **25 MHz** | **30 MHz** | **40 MHz** | **50 MHz** | **60 MHz** | **70 MHz** | **80 MHz** | **90 MHz** | **100 MHz** |
| **15** | **242. 5** | **312. 5** | **382. 5** | **452. 5** | **522. 5** | **592. 5** | **552.5** | **692. 5** | **N. A** | **N. A** | **N. A** | **N. A** | **N. A** |
| **30** | **505** | **665** | **645** | **805** | **785** | **945** | **905** | **1045** | **825** | **965** | **925** | **885** | **845** |
| **60** | **N. A** | **1010** | **990** | **1330** | **1310** | **1290** | **1610** | **1570** | **1530** | **1490** | **1450** | **1410** | **1370** |

**[Table 3]**

| **Table: 5.3.3-2: Minimum guardband (kHz) (FR2**) (Cited from Table: 5.3.3-2 of TS 38.104 of 3GPP) | | | | |
|---|---|---|---|---|
| **SCS (kHz)** | **50 MHz** | **100 MHz** | **200 MHz** | **400 MHz** |
| **60** | **1210** | **2450** | **4930** | **N. A** |
| **120** | **1900** | **2420** | **4900** | **9860** |

**[Table 4]**

| **Table: 5.3.3-3: Minimum guardband (kHz) of SCS 240 kHz SS/PBCH block (FR2)** (Cited from TS 38.104 Table: 5.3.3-3 of 3GPP) | | | |
|---|---|---|---|
| **SCS (kHz)** | **100 MHz** | **200 MHz** | **400 MHz** |
| **240** | **3800** | **7720** | **15560** |

In other words, it is sufficient that the communication control apparatus 130 can acquire the information listed so far, and the communication apparatus 110 is not necessarily required to provide the information to the communication control apparatus 130. Furthermore, the intermediate apparatus 130B (for example, a network manager) that bundles the plurality of communication apparatuses 110 does not need to provide the information to the communication control apparatus 130A. Providing information by the communication apparatus 110 or the intermediate apparatus 130B to the communication control apparatus 130 or 130A is merely one means of information provision in the present embodiment. The information listed so far means information that may be necessary for the communication control apparatus 130 to normally complete this procedure, and any means for providing the information may be used.

### <2.1.1.1 Supplement of required parameters>

In the registration procedure, in some cases, it is assumed that the device parameters related to not only the communication apparatus 110 but also the terminal 120 are required to be registered in the communication control apparatus 130. In such a case, the term "communication apparatus" in the description given in <2.1.1> may be replaced with a term "terminal" or a similar term. Furthermore, a parameter specific to the "terminal" that is not described in <2.1.1> may also be treated as a required parameter in the registration procedure. For example, a user equipment (UE) category specified in 3GPP can be mentioned.

### <2.1.2 Details of registration processing>

As described above, the communication apparatus 110 representing a wireless system that attempts to use the shared frequency band generates a registration request including a device parameter and notifies the communication control apparatus 130 of the registration request.

Here, in a case where the installer information is included in the device parameters, the communication apparatus 110 may perform tamper-proof processing or the like on the registration request by using the installer information. Furthermore, a part or all of the information included in the registration request may be subjected to encryption processing. Specifically, for example, a unique public key may be shared in advance between the communication apparatus 110 and the communication control apparatus 130, and the communication apparatus 110 may encrypt information using a secret key corresponding to the public key. Examples of the encryption target include security sensitive information such as position information.

Note that the ID and the position information of the communication apparatus 110 may be disclosed, and the communication control apparatus 130 may hold in advance the ID and the position information of the main communication apparatus 110 existing in its coverage. In such a case, since the communication control apparatus 130 can acquire the position information from the ID of the communication apparatus 110 that has transmitted the registration request, the position information does not need to be included in the registration request. Furthermore, it is also conceivable that the communication control apparatus 130 returns a necessary device parameter to the communication apparatus 110 that has transmitted the registration request, and in response to this, the communication apparatus 110 transmits a registration request including the device parameter necessary for registration. As described above, the information included in the registration request may be different depending on the case.

After receiving the registration request, the communication control apparatus 130 performs registration processing of the communication apparatus 110 and returns a registration response according to a processing result. If there is no shortage or abnormality of information necessary for registration, the communication control apparatus 130 records the information in an internal or external storage device and notifies normal completion. Otherwise, the communication control apparatus 130 notifies a registration failure. In a case where the registration is normally completed, the communication control apparatus 130 may allocate an ID to each of the communication apparatuses 110 and notify the ID information at the time of response. In a case where the registration fails, the communication apparatus 110 may notify the corrected registration request again. Furthermore, the communication apparatus 110 may change the registration request and try the registration procedure until the normal completion.

Note that the registration procedure may be performed even after the registration is normally completed. Specifically, for example, the registration procedure may be performed again in a case where the position information is changed beyond a predetermined standard due to movement/accuracy improvement or the like. The predetermined standard is typically determined by the legal system in each country or region. For example, in 47 C.F.R. Part 15 of the United States, in a case where the position of a device using Mode II personal/portable white space device, that is, the position of a device using a free frequency changes by 100 meters or more, the device is required to perform registration again.

### <2.2 Available frequency information inquiry procedure (available spectrum query procedure)>

The available frequency information inquiry procedure is a procedure in which a wireless system that attempts to use a shared frequency band inquires of the communication control apparatus 130 about information regarding an available frequency. Note that the available frequency information inquiry procedure does not necessarily need to be performed. Furthermore, the communication apparatus 110 that makes an inquiry as a representative of the wireless system that attempts to use the shared frequency band may be the same as or different from the communication apparatus 110 that has generated the registration request. Typically, the communication apparatus 110 that makes an inquiry notifies the communication control apparatus 130 of an inquiry request including information that can specify the communication apparatus 110, and thereby, the procedure is started.

Here, typically, the available frequency information is information indicating a frequency at which the communication apparatus 110 does not give critical interference to the primary system and secondary use can be safely performed.

The available frequency information is determined, for example, on the basis of a secondary use prohibited area called an exclusion zone. Specifically, for example, in a case where the communication apparatus 110 is installed in the secondary use prohibited area provided for the purpose of protecting the primary system using a frequency channel F1, the communication apparatus 110 is not notified of the frequency channel F1 as an available channel.

The available frequency information may also be determined, for example, by the degree of interference to the primary system. Specifically, for example, in a case where it is determined that the critical interference is given to the primary system even outside the secondary use prohibited area, the frequency channel may not be notified as an available channel. An example of a specific calculation method is described in <2.2.2> described later.

Furthermore, as described above, there may be frequency channels that are not notified as available due to conditions other than primary system protection requirements. Specifically, for example, in order to avoid interference that may occur between the communication apparatuses 110 in advance, a frequency channel being used by another communication apparatus 110 existing in the vicinity of the communication apparatus 110 may not be notified as an available channel. As described above, the available frequency information set in consideration of interference with the other communication apparatus 110 may be set as, for example, "use recommended frequency information" and provided together with the available frequency information. That is, the "use recommended frequency information" is desirably a subset of the available frequency information.

Even in a case of affecting the primary system, if the influence can be avoided by reducing the transmission power, the same frequency as that of the primary system or the neighboring communication apparatus 110 may be notified as an available channel. In such a case, typically, the maximum allowable transmission power information is included in the available frequency information. The maximum allowable transmission power is typically expressed by equivalent isotropic radiated power (EIRP). The present invention is not necessarily limited to this, and may be provided by, for example, a combination of conducted power and antenna gain. Moreover, the antenna gain may be set to an allowable peak gain for each spatial direction.

### <2.2.1 Details of required parameters>

As the information that can specify the wireless system that attempts to use the shared frequency band, for example, unique information registered at the time of the registration procedure, the above-described ID information, and the like can be assumed.

Furthermore, the inquiry request may also include inquiry requirement information. The inquiry requirement information may include, for example, information indicating a frequency band for which it is desired to know whether or not the frequency band is available. Furthermore, for example, the inquiry requirement information may include transmission power information. The communication apparatus 110 that makes an inquiry may include transmission power information, for example, in a case where it is desired to know only frequency information in which desired transmission power can be used. The inquiry requirement information does not necessarily need to be included in the inquiry request.

Furthermore, the inquiry request may also include a measurement report. The measurement report includes a result of measurement performed by the communication apparatus 110 and/or the terminal 120. A part or all of the measurement result may be represented by raw data or may be represented by processed data. For example, standardized metrics represented by reference signal received power (RSRP), reference signal strength indicator (RSSI), and reference signal received quality (RSRQ) may be used for measurement.

### <2.2.2 Details of available frequency evaluation processing>

After receiving the inquiry request, the available frequency is evaluated on the basis of the inquiry requirement information. For example, as described above, the available frequency can be evaluated in consideration of the existence of the primary system, the secondary use prohibited area thereof, and the communication apparatus 110 in the vicinity thereof.

Maximum allowable transmission power information may be derived. Typically, the maximum allowable transmission power information is calculated by using allowable interference power information in the primary system or a protection zone thereof, position information of a reference point that calculates an interference power level suffered by the primary system, registration information of the communication apparatus 110, and a propagation loss estimation model. Specifically, as an example, the maximum allowable transmission power information is calculated by the following equation.
[Math. 2] ${P}_{MaxTx \left(dBm\right)} = {I}_{Th \left(dBm\right)} + PL {\left(d\right)}_{\left(dB\right)}$

Here, P_{MaxTx(dBm)} is maximum allowable transmission power, I_{Th(dBm)} is allowable interference power (limit value of allowable interference power), d is a distance between a predetermined reference point and the communication apparatus 110, and PL(d)_{(dB)} is a propagation loss at the distance d. In Equation (2), the antenna gain in the transmission and reception device is not included, but the antenna gain in the transmission and reception device may be included according to the maximum allowable transmission power expression method (EIRP, conducted power, and the like) or the reception power reference point (antenna input point, antenna output point, and the like). Furthermore, feeder loss may be considered as necessary. The present embodiment is applied, for example, when deriving the maximum allowable transmission power information. Details will be described later.

Furthermore, Equation (2) is described on the basis of the assumption that a single communication apparatus 110 is an interference source (single station interference). For example, in a case where it is necessary to consider aggregated interference from a plurality of communication apparatuses 110 at the same time, a correction value may be added. Specifically, for example, the correction value can be determined on the basis of three types of interference margin methods (fixed/predetermined, flexible, flexible minimized) disclosed in Non-Patent Document 4 (ECC Report 186).

Note that the allowable interference power information itself is not necessarily directly used as in Equation (2). For example, in a case where a required signal power-to-interference power ratio (SIR), a signal to interference plus noise ratio (SINR), an interference-to-noise ratio (INR), and the like of the primary system are available, they may be converted into allowable interference power and used. Note that such conversion processing is not limited to this processing, and may be applied to processing of other procedures.

Note that, although Equation (2) is expressed using logarithms, it is a matter of course that the Equation (2) may be converted into a true number and used at the time of implementation. Furthermore, all parameters in logarithmic notation described in the present disclosure may be appropriately converted into true numbers and used.

Furthermore, in a case where the above-described transmission power information is included in the inquiry requirement information, the available frequency can be evaluated by a method different from the above-described method. Specifically, for example, in a case where it is assumed that desired transmission power indicated by transmission power information is used, when an estimated amount of interference is less than allowable interference power in the primary system or a protection zone thereof, it is determined that the frequency channel is available, and the communication apparatus 110 is notified of the available frequency channel.

Furthermore, for example, in a case where an area or a space in which the communication apparatus 110 can use the shared frequency band is determined in advance, as similar to an area of a radio environment map (REM), the available frequency information may be simply derived on the basis of only coordinates (coordinates of X-axis, Y-axis, and Z-axis or latitude, longitude, and ground level of the communication apparatus 110) included in the position information of the communication apparatus 110. Furthermore, for example, even in a case where a lookup table that associates coordinates of a position of the communication apparatus 110 with available frequency information is prepared, the available frequency information described above may be derived on the basis of only the position information of the communication apparatus 110. As described above, there are various methods for determining the available frequency, and the method is not limited to the example of the present disclosure.

Furthermore, in a case where the communication control apparatus 130 acquires information regarding capability of a band extension technology such as carrier aggregation (CA) or channel bonding as the frequency band information supported by the communication apparatus 110, the communication control apparatus 130 may include an available combination, a recommended combination, or the like thereof in the available frequency information.

Furthermore, in a case where the communication control apparatus 130 acquires information regarding a combination of frequency bands supported by the dual connectivity and the multi connectivity as the frequency band information supported by the communication apparatus 110, the communication control apparatus 130 may include information such as an available frequency and a recommended frequency in the available frequency information for the dual connectivity and the multi connectivity.

Furthermore, in a case of providing the available frequency information for the band extension technology as described above, when the imbalance of the maximum allowable transmission power occurs between the plurality of frequency channels, the available frequency information may be provided after adjusting the maximum allowable transmission power of each frequency channel. For example, from a perspective of primary system protection, the maximum allowable transmission power of each frequency channel may be aligned with the maximum allowable transmission power of a frequency channel having a low maximum allowable power spectral density (PSD).

The evaluation of the available frequency does not necessarily need to be performed after the inquiry request is received. For example, after the normal completion of the above-described registration procedure, the communication control apparatus 130 may independently perform the procedure without an inquiry request. In such a case, an REM, a lookup table, or an information table similar to those described above as an example may be created.

Furthermore, the radio wave use priority such as PAL or GAA may also be evaluated. For example, in a case where the registered device parameter or the inquiry requirement includes the information regarding the priority of the radio wave use, it may be determined whether the frequency use is possible on the basis of the priority, and the notification may be made. Furthermore, for example, as disclosed in Non-Patent Document 3, in a case where information (in Non-Patent Document 3, referred to as a cluster list) regarding the communication apparatus 110 that performs high priority use (for example, PAL) from the user is registered in the communication control apparatus 130 in advance, evaluation may be performed on the basis of the information.

After the evaluation of the available frequency is completed, the communication control apparatus 130 notifies the communication apparatus 110 of the evaluation result.

The communication apparatus 110 may select a desired communication parameter by using the evaluation result received from the communication control apparatus 130.

### <2.3 Frequency use permission procedure (spectrum grant procedure)>

The frequency use permission procedure is a procedure for the wireless system that attempts to use the shared frequency band to receive the secondary use permission of the frequency from the communication control apparatus 130. The communication apparatus 110 that performs the frequency use permission procedure as a representative of the wireless system may be the same as or different from the communication apparatus 110 that has performed the procedure so far. Typically, the communication apparatus 110 notifies the communication control apparatus 130 of a frequency use permission request including information that can specify the communication apparatus 110, and thereby, the procedure is started. Note that the available frequency information inquiry procedure is not necessarily as described above. Therefore, the frequency use permission procedure is performed next to the available frequency information inquiry procedure in some cases, or is performed next to the registration procedure.

In the present embodiment, it is assumed that at least the following two types of frequency use permission request methods can be used.
- Designation method
- Flexible method

The designation method is a request method in which the communication apparatus 110 designates a desired communication parameter and requests the communication control apparatus 130 to permit operation based on the desired communication parameter. The desired communication parameter includes, but is not particularly limited to, a frequency channel, a maximum transmission power, and the like to be used. For example, a wireless interface technology specific parameter (such as a modulation scheme or a duplex mode) may be specified. Furthermore, information indicating radio wave use priority such as PAL and GAA may be included.

The flexible method is a request method in which the communication apparatus 110 specifies only a requirement regarding communication parameters and requests the communication control apparatus 130 to designate communication parameters that can be permitted for secondary use while satisfying the requirement. Examples of the requirement related to the communication parameters include, but are not particularly limited to, a bandwidth, a desired maximum transmission power, or a desired minimum transmission power. For example, a wireless interface technology specific parameter (such as a modulation scheme or a duplex mode) may be specified. Specifically, for example, one or more TDD frame structures may be selected in advance and notified.

As similar to the inquiry request, the frequency use permission request may also include the measurement report in either the designation method or the flexible method. The measurement report includes a result of measurement performed by the communication apparatus 110 and/or the terminal 120. The measurement may be represented by raw data or may be represented by processed data. For example, standardized metrics represented by reference signal received power (RSRP), reference signal strength indicator (RSSI), and reference signal received quality (RSRQ) may be used for measurement.

Note that the information regarding the method used by the communication apparatus 110 may be registered in the communication control apparatus 130 at the time of the registration procedure described in <2.1>.

### <2.3.1 Details of frequency use permission processing>

After receiving the frequency use permission request, the communication control apparatus 130 performs frequency use permission processing on the basis of the frequency use permission request method. For example, using the method described in <2.2>, it is possible to perform the frequency use permission processing in consideration of the primary system, the secondary use prohibited area, the presence of the communication apparatus 110 in the vicinity, and the like. The present embodiment is applied to, for example, frequency use permission processing. Details will be described later.

In a case where the flexible method is used, the maximum allowable transmission power information may be derived using the method described in <2.2.2>.
Typically, the maximum allowable transmission power information is calculated by using allowable interference power information in the primary system or a protection zone thereof, position information of a reference point that calculates an interference power level suffered by the primary system, registration information of the communication apparatus 110, and a propagation loss estimation model. Specifically, as an example, the maximum allowable transmission power information is calculated by Equation (2) described above.

Furthermore, as described above, Equation (2) is described on the basis of the assumption that a single communication apparatus 110 is an interference source. For example, in a case where it is necessary to consider aggregated interference from a plurality of communication apparatuses 110 at the same time, a correction value may be added. Specifically, for example, the correction value can be determined on the basis of three types of methods (fixed/predetermined, flexible, flexible minimized) disclosed in Non-Patent Document 4 (ECC Report 186) .

The communication control apparatus 130 can use various propagation loss estimation models in a frequency use permission procedure, an available frequency evaluation processing for an available frequency information inquiry request, and the like. In a case where a model is designated for each application, it is desirable to use the designated model. For example, in Non-Patent Document 3 (WINNF-TS-0112), a propagation loss model such as Extended Hata (eHATA) or irregular terrain model (ITM) is adopted for each application. Certainly, the propagation loss model is not limited thereto.

There are also propagation loss estimation models that require information regarding radio wave propagation paths. The information regarding the radio wave propagation path may include, for example, information indicating inside and outside of a line of sight (line of sight (LOS) and/or non line of sight (NLOS)), topographical information (undulations, sea levels, and the like), environmental information (urban, suburban, rural, open sky, and the like), and the like. When using the propagation loss estimation model, the communication control apparatus 130 may estimate these pieces of information from the already acquired registration information of the communication apparatus 110 or information of the primary system. Alternatively, in a case where there is a parameter specified in advance, it is desirable to use the parameter.

In a case where the propagation loss estimation model is not designated in a predetermined application, the propagation loss estimation model may be selectively used as necessary. For example, when estimating the interference power to the other communication apparatus 110, a model that is calculated with a small loss such as a free space loss model can be used, and when estimating the coverage of the communication apparatus 110, a model that is calculated with a large loss can be used.

Furthermore, in a case where the designated propagation loss estimation model is used, as an example, the frequency use permission processing can be performed by evaluating the interference risk. Specifically, for example, in a case where it is assumed that desired transmission power indicated by transmission power information is used, when an estimated amount of interference is less than allowable interference power in the primary system or a protection zone thereof, it is determined that use of the frequency channel can be permitted, and the communication apparatus 110 is notified of the available frequency channel.

In any method of the designation method and the flexible method, as similar to the inquiry request, the radio wave use priority such as PAL or GAA may also be evaluated. For example, in a case where the registered device parameter or the inquiry requirement includes the information regarding the priority of the radio wave use, it may be determined whether the frequency use is possible on the basis of the priority, and the notification may be made. Furthermore, for example, in a case where information regarding the communication apparatus 110 that performs high priority use (for example, PAL) from the user is registered in the communication control apparatus 130 in advance, evaluation may be performed on the basis of the information. For example, in Non-Patent Document 3 (WINNF-TS-0112), information regarding the communication apparatus 110 is referred to as a cluster list.

The frequency use permission processing is not necessarily performed due to the reception of the frequency use permission request. For example, after the normal completion of the above-described registration procedure, the communication control apparatus 130 may independently perform the procedure without a frequency use permission request. Furthermore, for example, the frequency use permission processing may be performed at regular intervals. In such a case, an REM, a lookup table, or an information table similar to those described above may be created. As a result, since the frequency that can be permitted is determined only by the position information, the communication control apparatus 130 can quickly return a response after receiving the frequency use permission request.

### <2.4 Frequency use notification (spectrum use notification/heartbeat)>

The frequency use notification is a procedure in which the wireless system using the shared frequency band notifies the communication control apparatus 130 of the use of the frequency based on the communication parameter allowed to be used in the frequency use permission procedure. The communication apparatus 110 that performs the frequency use notification as a representative of the wireless system may be the same as or different from the communication apparatus 110 that has performed the procedure so far. Typically, the communication apparatus 110 notifies the communication control apparatus 130 of a notification message including information that can specify the communication apparatus 110.

The frequency use notification is desirably performed periodically until the use of the frequency is rejected from the communication control apparatus 130. In that case, the frequency use notification is also referred to as a heartbeat.

After receiving the frequency use notification, the communication control apparatus 130 may determine whether to start or continue the frequency use (in other words, radio wave transmission at a permissible frequency). Examples of the determination method include confirmation of the frequency use information of the primary system. Specifically, it is possible to determine permission or rejection of the start or continuation of the frequency usage (radio wave transmission at the permitted frequency) on the basis of a change in the use frequency of the primary system, a change in the frequency use status of the primary system in which the radio wave use is not steady (for example, an on-board radar of CBRS of the United States), and the like. If the start or continuation is permitted, the communication apparatus 110 may start or continue frequency use (radio wave transmission at a permitted frequency).

After receiving the frequency use notification, the communication control apparatus 130 may instruct the communication apparatus 110 to reconfigure the communication parameters. Typically, in the response of the communication control apparatus 130 to the frequency use notification, the reconfiguration of the communication parameters may be instructed. For example, information regarding recommended communication parameters (hereinafter, recommended communication parameter information) may be provided. The communication apparatus 110 to which the recommended communication parameter information has been provided desirably performs the frequency use permission procedure described in <2.4> again using the recommended communication parameter information.

### <2.5 Supplement of various procedures>

The various procedures described above do not necessarily need to be implemented individually, as described below. For example, by substituting a third procedure with roles of two different procedures, the two different procedures may be achieved. Specifically, for example, the registration request and the available frequency information inquiry request may be integrally notified. Furthermore, for example, the frequency use permission procedure and the frequency use notification may be integrally performed. Of course, it is not limited to these combinations, and three or more procedures may be performed integrally. Furthermore, as described above, one procedure may be performed by being divided into a plurality of times of procedures.

Furthermore, the expression "acquire" or an expression equivalent thereto in the present disclosure does not necessarily mean to acquire according to the procedure described in the present disclosure. For example, although the position information of the communication apparatus 110 is used in the available frequency evaluation processing in the above description, it means that the information acquired in the registration procedure does not necessarily need to be used, and in a case where the position information is included in the available frequency inquiry procedure request, the position information may be used. In other words, the procedure for acquisition described in the present disclosure is an example, and acquisition by other procedures is also permitted within the scope of the present disclosure and within the scope of technical feasibility.

Furthermore, the information described to be included in the response from the communication control apparatus 130 to the communication apparatus 110 may be actively notified from the communication control apparatus 130 by the push method if possible. As a specific example, the available frequency information, the recommended communication parameter information, the radio wave transmission continuation rejection notification, and the like may be notified by the push method.

### <2.6 Various procedures related to terminal>

The description has been made mainly on the assumption of the processing in the communication apparatus 110A. However, in some embodiments, not only the communication apparatus 110A but also the terminal 120 and the communication apparatus 110B can operate under the management of the communication control apparatus 130. That is, a scenario in which the communication parameter is determined by the communication control apparatus 130 is assumed. Even in such a case, basically, each procedure described in <2.1> to <2.4> can be used. However, unlike the communication apparatus 110A, the terminal 120 and the communication apparatus 110B need to use the frequency managed by the communication control apparatus 130 for the backhaul link, and cannot perform radio wave transmission without permission. Therefore, it is desirable to start backhaul communication for the purpose of accessing the communication control apparatus 130 only after detecting a radio wave or an authorization signal transmitted by the communication apparatus 110A (communication apparatus 110 capable of providing wireless communication service or master communication apparatus 110 of master-slave type).

On the other hand, under the management of the communication control apparatus 130, the terminal or the communication apparatus 110B may also set an allowable communication parameter for the purpose of protecting the primary system. However, the communication control apparatus 130 cannot know the position information and the like of these apparatuses in advance. Furthermore, these apparatuses are also likely to have mobility. That is, the position information is dynamically updated. Depending on the legal system, in a case where the position information changes by a certain amount or more, re-registration to the communication control apparatus 130 may be required in some cases.

In consideration of such various use forms, operation forms, and the like of the terminal 120 and the communication apparatus 110, in the operation form of the TVWS (Non-Patent Document 5) defined by the office of communication (Ofcom), the following two types of communication parameters are defined.
- Generic operational parameters
- Specific operational parameters

The generic operational parameters are communication parameters defined as "parameters that can be used by any slave WSD located within the coverage area of a predetermined master WSD (corresponding to the communication apparatus 110)" in Non-Patent Document 5. One of the features is that the parameters are calculated by the WSDB without using the position information of the slave WSD.

The generic operational parameters may be provided by unicast or broadcast from the communication apparatus 110 that is already permitted to perform radio wave transmission from the communication control apparatus 130. For example, a broadcast signal represented by a contact verification signal (CVS) specified in Part 15 Subpart H of the FCC rules in the United States may be used. Alternatively, it may be provided by a broadcast signal specific to a wireless interface. As a result, the terminal 120 and the communication apparatus 110B can be treated as communication parameters used for radio wave transmission for the purpose of accessing the communication control apparatus 130.

Specific operational parameters are communication parameters defined as "parameters that can be used by a specific slave white space device (WSD)" in Non-Patent Document 5. In other words, it is a communication parameter calculated using the device parameters of the slave WSD corresponding to the terminal 120. One of the features is that the parameters are calculated by the white space database (WSDB) using the position information of the slave WSD.

### <2.7 Procedure occurring between communication control apparatuses>

### <2.7.1 Information exchange>

The communication control apparatus 130 can exchange management information with another communication control apparatus 130. At least the following information is desirably exchanged.
- Information related to communication apparatus 110
- Area information
- System information to be protected

The information related to the communication apparatus 110 includes at least registration information and communication parameter information of the communication apparatus 110 operating under permission of the communication control apparatus 130. Registration information of the communication apparatus 110 having no permitted communication parameter may be included.

The registration information of the communication apparatus 110 is typically device parameters of the communication apparatus 110 registered in the communication control apparatus 130 in the above-described registration procedure. Not all the registered information is necessarily exchanged. For example, information that may correspond to personal information does not need to be exchanged. Furthermore, when the registration information of the communication apparatus 110 is exchanged, the registration information may be encrypted and exchanged, or the information may be exchanged after the content of the registration information is made ambiguous. For example, information converted into a binary value or information signed using an electronic signature mechanism may be exchanged.

The communication parameter information of the communication apparatus 110 is typically information related to communication parameters currently used by the communication apparatus 110. At least information indicating the use frequency and the transmission power is desirably included. Other communication parameters may be included.

The area information is typically information indicating a predetermined geographical area. The information may include region information of various attributes in various manners.

For example, as in PAL protection area (PPA) disclosed in Non-Patent Document 3 (WINNF-TS-0112), protection zone information of the communication apparatus 110 serving as a high priority secondary system may be included in the area information. The area information in this case can be expressed by, for example, a set of three or more coordinates indicating the geographical position. Furthermore, for example, in a case where a plurality of communication control apparatuses 130 can refer to a common external database, the area information is expressed by a unique ID, and the actual geographical area can be referred to from the external database using the ID.

Furthermore, for example, information indicating the coverage of the communication apparatus 110 may be included. The area information in this case also can be expressed by, for example, a set of three or more coordinates indicating the geographical position. Furthermore, for example, assuming that the coverage is a circle centered on the geographical position of the communication apparatus 110, the coverage can also be expressed by information indicating the size of the radius. Furthermore, for example, in a case where a plurality of communication control apparatuses 130 can refer to a common external database in which area information is recorded, the information indicating the coverage is expressed by a unique ID, and the actual coverage can be referred to from the external database using the ID.

Furthermore, as another mode, information related to an area section determined in advance by an administration or the like can also be included. Specifically, for example, it is possible to indicate a certain region by indicating an address. Furthermore, for example, a license area or the like can be similarly expressed.

Furthermore, as still another mode, the area information does not necessarily express a planar area, and may express a three-dimensional space. For example, it may be expressed using a spatial coordinate system. Furthermore, for example, information indicating a predetermined closed space such as a floor number, a floor, and a room number of a building may be used.

The protection target system information is, for example, information of a wireless system treated as a protection target, such as the above-described incumbent tier. Examples of the situation in which this information needs to be exchanged include a situation in which cross-border coordination is required. It is well conceivable that different objects to be protected exist in the same band between neighboring countries or regions. In such a case, system information to be protected may be exchanged between different communication control apparatuses 130 in different countries or regions to which the communication control apparatuses belong as necessary.

As another mode, the system information to be protected may include information regarding a secondary licensee and information regarding a wireless system operated by the secondary licensee. The secondary licensee is specifically the lessee of the license, and for example, it is assumed that the secondary licensee borrows the PAL from the holder and operates the wireless system owned by the secondary licensee. In a case where the communication control apparatus 130 performs the rent management independently, information regarding the secondary licensee and information regarding the wireless system operated by the secondary licensee can be exchanged with another communication control apparatus for the purpose of protection.

These pieces of information can be exchanged between the communication control apparatuses 130 regardless of the decision-making topology applied to the communication control apparatus 130.

Furthermore, these pieces of information may be exchanged in various methods. Examples thereof will be described below.
- ID designation method
- Period designation method
- Region designation method
- Dump method

The ID designation method is a method of acquiring information corresponding to an ID imparted in advance to specify information managed by the communication control apparatus 130. For example, it is assumed that the first communication control apparatus 130 manages a communication apparatus 110 with ID: AAA. At this time, the second communication control apparatus 130 designates the ID: AAA to the first communication control apparatus 130 and makes an information acquisition request. After receiving the request, the first communication control apparatus 130 searches for information regarding ID: AAA, and notifies of information regarding the communication apparatus 110 with ID: AAA, for example, registration information communication parameter information, and the like in a response.

The period designation method is a method in which information satisfying a predetermined condition can be exchanged in a designated specific period.

Examples of the predetermined condition include the presence or absence of information update. For example, in a case where acquisition of information regarding the communication apparatus 110 in a specific period is designated in the request, registration information of the communication apparatus 110 newly registered within the specific period can be notified in a response. Furthermore, the registration information of the communication apparatus 110 whose communication parameters have been changed within the specific period or the information regarding the communication parameters may also be notified in a response.

Examples of the predetermined condition include whether the predetermined condition is recorded by the communication control apparatus 130. For example, in a case where acquisition of information regarding the communication apparatus 110 in a specific period is specified in the request, the registration information or the information regarding the communication parameters recorded by the communication control apparatus 130 in the period can be notified in a response. In a case where the information is updated in the period, the latest information in the period can be notified. Alternatively, the update history may be notified for each piece of information.

In the region designation method, a specific region is designated, and information of the communication apparatus 110 belonging to the region is exchanged. For example, in a case where acquisition of information regarding the communication apparatus 110 in a specific region is specified in the request, the registration information or the information regarding the communication parameters of the communication apparatus 110 installed in the region can be notified in a response.

The dump method is a method of providing all pieces of information recorded by the communication control apparatus 130. At least information and area information related to the communication apparatus 110 are desirably provided by the dump method.

All the above description of the information exchange between the communication control apparatuses 130 is based on the pull method. That is, it is a form in which information corresponding to the parameters specified in the request are responded, and can be achieved by the HTTP GET method as an example. However, the method is not limited to the pull method, and information may be actively provided to another communication control apparatus 130 by the push method. The push method may be implemented by, for example, the HTTP POST method.

### <2.7.2 Instruction/request procedure>

The communication control apparatus 130 may issues an instruction or a request with respect to each other. Specifically, as an example, reconfiguration of communication parameters of the communication apparatus 110 is exemplified. For example, in a case where it is determined that the first communication apparatus 110 managed by the first communication control apparatus 130 is greatly interfered with by the second communication apparatus 110 managed by the second communication control apparatus 130, the first communication control apparatus 130 may request the second communication control apparatus 130 to change the communication parameters of the second communication apparatus 110.

Another example is reconfiguration of area information. For example, in a case where calculation of coverage information and protection zone information regarding the second communication apparatus 110 managed by the second communication control apparatus 130 is incomplete, the first communication control apparatus 130 may request the second communication control apparatus 130 to reconfigure the area information. In addition to this, the area information reconfiguration request may be made for various reasons.

### <2.8 Information transmission means>

Notification (signaling) between entities described above may be achieved via various media. E-UTRA or 5G NR will be described as an example. As a matter of course, the embodiment is not limited thereto.

### <2.8.2 Signaling between communication control apparatus 130 and communication apparatus 110>

The notification from the communication apparatus 110 to the communication control apparatus 130 may be performed, for example, in an application layer. For example, hyper text transfer protocol (HTTP) may be used. Signaling may be performed by describing the required parameters in the message body of the HTTP according to a predetermined manner. Moreover, in a case of using HTTP, notification from the communication control apparatus 130 to the communication apparatus 110 is also performed according to the HTTP response mechanism.

### <2.8.3 Signaling between communication apparatus 110 and terminal 120>

The notification from the communication apparatus 110 to the terminal 120 may be performed using, for example, at least one of radio resource control (RRC) signaling, system information (SI), or downlink control information (DCI). Furthermore, examples of the downlink physical channel include a physical downlink control channel (PDCCH), a physical downlink shared channel (PDSCH), a physical broadcast channel (PBCH), an NR-PDCCH, an NR-PDSCH, an NR-PBCH, and the like, but the notification may be implemented using at least one of these.

The notification from the terminal 120 to the communication apparatus 110 may be performed using, for example, radio resource control (RRC) signaling or uplink control information (UCI). Furthermore, the notification may be implemented by using an uplink physical channel (physical uplink control channel (PUCCH), physical uplink shared channel (PUSCH), physical random access channel (PRACH)).

The signaling is not limited to the physical layer signaling described above, and the signaling may be implemented at a higher layer. For example, when the signaling is performed in the application layer, signaling may be performed by describing the required parameters in the message body of the HTTP according to a predetermined manner.

### <2.8.4 Signaling between terminals 120>

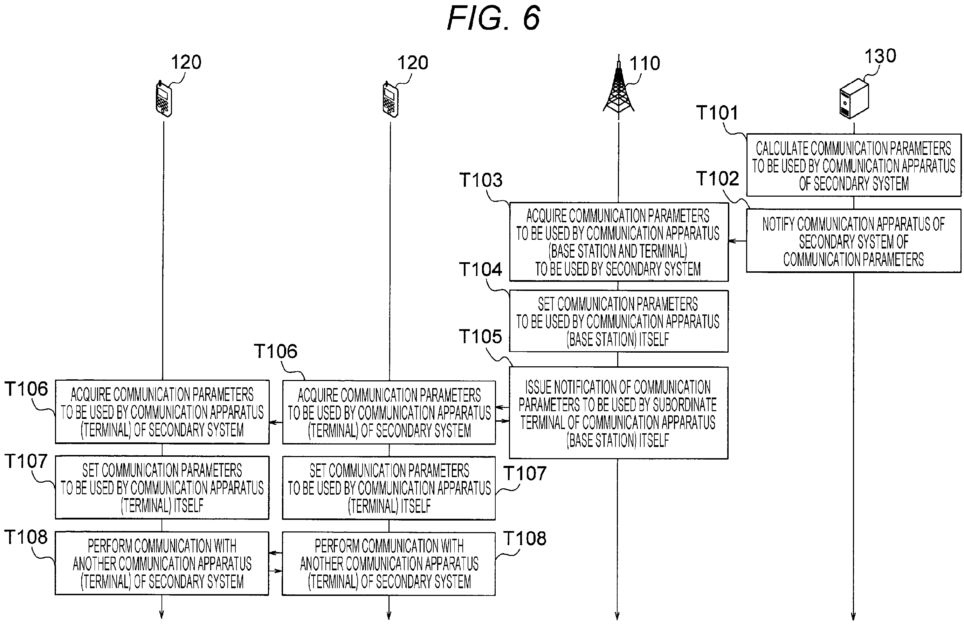

Fig. 6 illustrates an example of a flow of signaling in a case where device-to-device (D2D) or vehicle-to-everything (V2X), which is communication between the terminals 120, is assumed as communication of the secondary system. The D2D or V2X which is communication between the terminals 120 may be performed using a physical sidelink channel (physical sidelink control channel (PSCCH), physical sidelink shared channel (PSSCH), physical sidelink broadcast channel (PSBCH)). The communication control apparatus 130 calculates communication parameters to be used by the secondary system (T101) and notifies the communication apparatus 110 of the secondary system of the calculated communication parameters (T102). Values of the communication parameters may be determined and notified, or a condition indicating a range or the like of the communication parameter may be determined and notified. The communication apparatus 110 acquires communication parameters to be used by the secondary system (T103), and sets the communication parameters to be used by the communication apparatus 110 itself (T104). Then, the communication parameters to be used by the subordinate terminal 120 of the communication apparatus 110 is notified to the terminal 120 (T105). Each terminal 120 under the control of the communication apparatus 110 acquires (T106) and sets (T107) communication parameters to be used by the terminal 120. Then, communication with another terminal 120 of the secondary system is performed (T108).

The communication parameters in a case where the target frequency channel for frequency sharing is used in the sidelink (direct communication between the terminals 120) may be notified, acquired, or set in a form associated with a resource pool for sidelink in the target frequency channel. The resource pool is a wireless resource for a sidelink set by a specific frequency resource or time resource. Examples of the frequency resource include a resource block and a component carrier. Examples of the time resource include a wireless frame (radio frame), a subframe, a slot, a mini-slot, and the like. In a case where a resource pool is set in a frequency channel to be subjected to frequency sharing, the resource pool is set in the terminal 120 by the communication apparatus 110 on the basis of at least one of RRC signaling, system information, or downlink control information. Then, the communication parameters to be applied in the resource pool and the sidelink are also set in the terminal 120 by the communication apparatus 110 on the basis of at least one of RRC signaling, system information, or downlink control information from the communication apparatus 110 to the terminal 120. The notification of the setting of the resource pool and the notification of the communication parameters to be used in the sidelink may be performed simultaneously or individually.

### <<3. Channel allocation>>

Here, channel allocation in a case where any channel within a specific frequency band such as a shared frequency band is allocated to an identical user in a plurality of areas will be described.

Hereinafter, for ease of understanding, CBRS in the United States will be described as an example. However, the channel allocation of the present disclosure is not limited to the CBRS of the United States. That is, in a case where a channel is allocated to a device other than the CBRS in the United States, terms related to the CBRS in the United States, such as "PAL" and "PAL Holder", should be read in place of other terms such as "license" and "user".

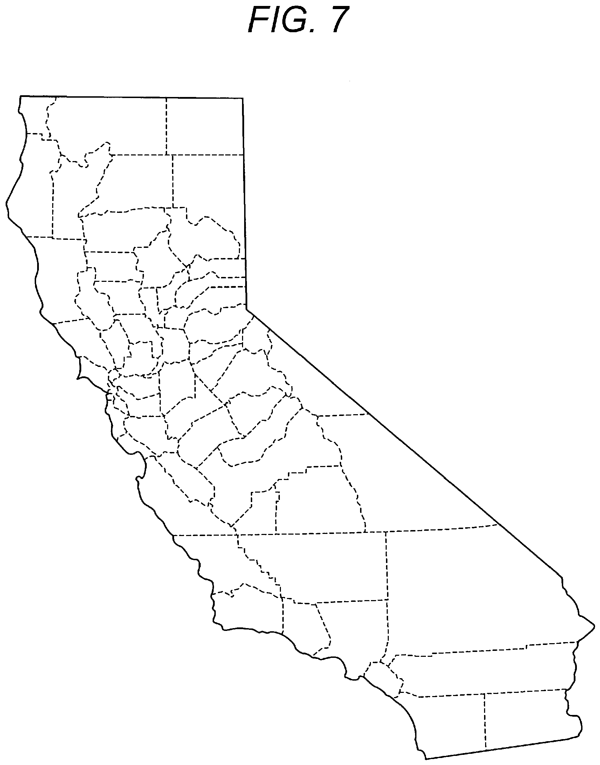

Fig. 7 is a diagram illustrating an example of a license area of a PAL. Fig. 7 is a map showing the state of California in the United States, and boundaries of a county included in the state of California are indicated by dotted lines. There is a plurality of counties in California, but it is assumed here that each of these counties is a license area of a PAL, and a channel is allocated to each of the counties.

According to the FCC rules, in a case where there is an identical PAL holder in adjacent license areas, it is recommended to make the identical channel available to the PAL holder in the license area. For example, it is assumed that the first PAL holder has a PAL in the license area α, and channel 1 (CH1) of a license area α is allocated to the first PAL holder. Then, in a case where the first PAL holder also has a PAL in a license area β adjacent to the license area α, it is recommended to allocate CH1 of the license area β to the first PAL holder.

Furthermore, according to the FCC rule, in a case where the identical PAL holder holds a plurality of PALs in the identical license area, it is recommended that a continuous channel be made available in the license area. For example, in a case where the first PAL holder has two PALs in the license area α, it is recommended to allocate two continuous channels such as CH3 and CH4 in the license area α to the first PAL holder.

Note that, here, when channels included in the entire frequency band to be used such as a shared frequency band are arrayed in order of frequency bands allocated to the channels, adjacent channels are referred to as "continuous channels". The order of the frequency bands may be the ascending order or the descending order of the frequency bands. Furthermore, it is assumed that channel numbers are allocated in ascending order or descending order of frequency bands allocated to the channels. That is, in a case where the numbers of the two channels are different by one (for example, CH3 and CH4), there is no other channel between the frequency bands allocated to the two channels.

The present embodiment utilizes graph theory to perform channel allocation so as to satisfy the recommendation regulations as described above as much as possible.

Note that the information necessary for channel allocation includes, for example, information indicating a license area in which channel allocation is performed, information indicating a PAL holder in each license area, information indicating the number of PALs held by the PAL holder in each license area, information indicating a constraint at the time of channel allocation, information indicating a relationship between license areas, and the like.

As a constraint regarding the PAL in each license area, there is a recommendation regulation of allocating the same or continuous channels to the identical PAL holder as much as possible as described above. Furthermore, there are also obligation regulations such as the holding upper limit number of PALs, the upper limit number of PAL holders, and the total number of channels in the shared frequency band. For example, the number of PALs held by one PAL holder is defined as equal to or less than four in each license area. Furthermore, the total number of PALs issued in each license area is defined as equal to or less than seven. Furthermore, the total number of channels in each license area is defined as ten. Therefore, a minimum of three empty channels are generated in each license area.

The information indicating the relationship between the license areas is used in consideration of a constraint at the time of channel allocation. For example, in a case where adjacent license areas need to be considered, information indicating a geographical relationship of each license area is used to recognize the adjacent license areas. The information indicating the geographical relationship of each license area may be information such as a map illustrated in Fig. 7. Alternatively, the information may be a table related to a license area, and another license area sharing a boundary may be indicated as an attribute in each record using each license area as a primary key.

Note that not only adjacent license areas are considered. A license area within a certain distance may be considered in some cases. Therefore, the presence or absence of the relationship may be determined on the basis of information regarding the distance between the license areas, such as another license area existing within a predetermined distance from the predetermined reference point of the license area. Furthermore, even adjacent license areas may be considered to have no relationship in some cases. For example, for license areas adjacent to each other via a mountain range or the like, an identical channel may not be allocated in some cases. As described above, the presence or absence of a relationship between the license areas may be comprehensively determined on the basis of information regarding geography such as a distance, a direction, and a topography.

The information necessary for channel allocation may be public information of a radio wave inspection agency such as FCC, a private organization, or the like, or may be generated on the basis of the public information. For example, in a case where the auction result of the PAL is published, the information indicating the PAL holder and the information indicating the number of PALs held may be generated on the basis of the auction result.

Note that information necessary for channel allocation may be stored in a device that performs channel allocation and treated like a database. Note that, although the database is described, it may not be constructed by software for the database, and may be a spreadsheet in a format such as xls, xlsx, or csv. Furthermore, when these pieces of information are stored, it may be interpreted that the database is constructed.

Note that, in order to uniquely identify each license area, an identification code such as a three-letter code may be appropriately determined, and each license area may be represented by the identification code in the database described above. Alternatively, a public identification code of an area set as a license area, for example, a County FIPS code, may be diverted.

Furthermore, in the database described above, the PAL holder may be represented by an ID in order to uniquely identify the PAL holder. For example, the PAL holder may be represented by an FCC registration number (FRN), an ID issued at the time of registration of a PAL, or the like. Note that, as long as the PAL holder can be uniquely identified, the PAL holder may be represented by a name, for example, a corporate registered name, a unique name set at the time of registration of the PAL, or the like.

Next, a channel allocation method will be described. In the method, first, a preferable channel allocation condition is determined for each PAL holder. Then, the channels are sequentially allocated to each PAL holder so as to satisfy the preferable channel allocation condition as much as possible.

A method of determining a channel allocation condition will be described. First, the map illustrated in Fig. 7 is prepared for each PAL holder. For example, in a case where there are five PAL holders in California as a whole, the same five maps are prepared.

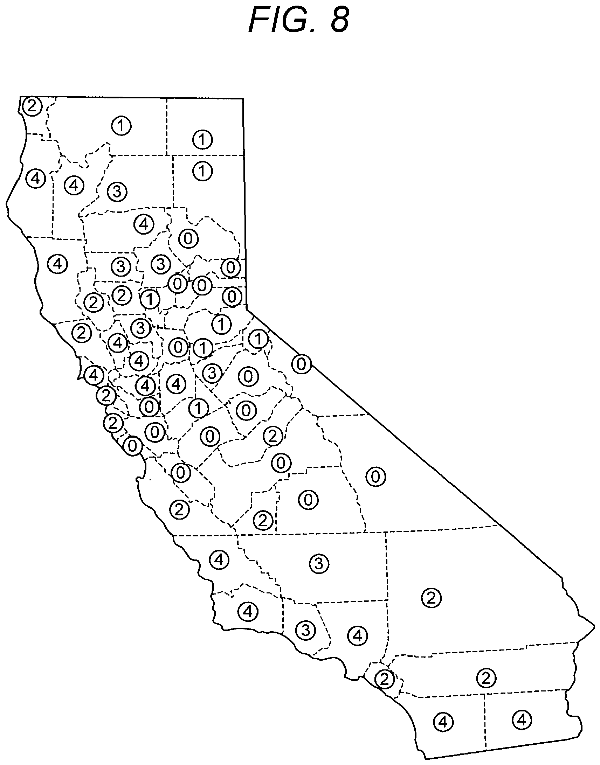

Then, each license area is regarded as a node (vertex) of the graph theory. That is, here, the license area is also referred to as a node. Fig. 8 is a diagram showing license areas by nodes. In Fig. 8, a circle present in each county represents a node representing the county.

Furthermore, in the map of Fig. 8, numbers are shown in circles representing nodes. The number means the number of PALs held by the PAL holder corresponding to the map in the license area corresponding to the node. For example, in the map of the first PAL holder, the number of PALs held in each license area of the first PAL holder is described in the corresponding node. As described above, the number of PALs held in each license area is recorded for each map (that is, for each PAL holder). Since the number of PALs held in each license area is different for each PAL holder, the number in each node is different in each generated map.

Next, the adjacent license areas are connected by a line (edge) for the license area in which the number of PALs held is equal to or greater than one. That is, the license area having a number of PALs held of 0 is assumed to not exist.

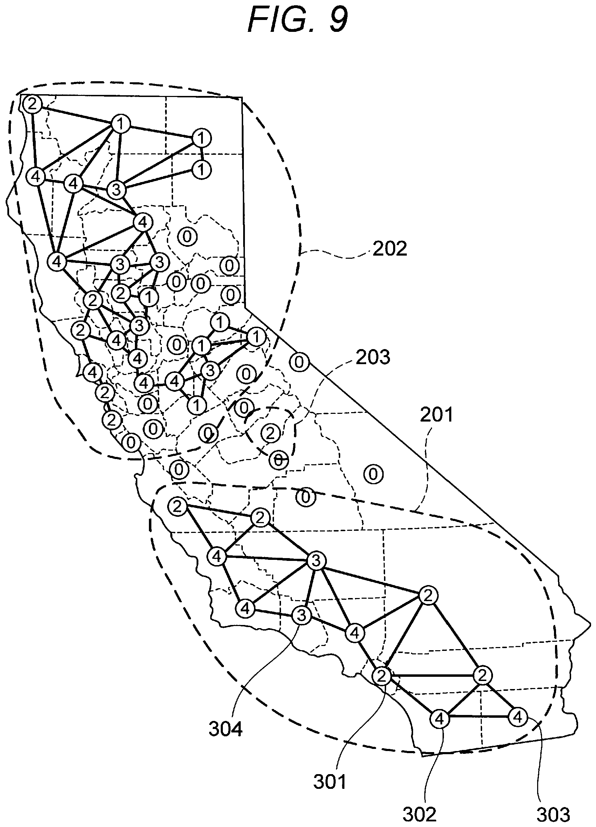

Fig. 9 is a diagram illustrating nodes connected by edges. As indicated by a dotted frame in Fig. 9, all the nodes in which the number of PALs held is equal to or greater than one are not combined and are separated into three sets (first sets).

Here, a set of nodes connected via one or more edges or nodes is referred to as a connected set. Note that a set including nodes having no edge, that is, a case where there is only one constituent element is also regarded as a connected set. Furthermore, a set including nodes having no edge is also referred to as a singleton. In Fig. 9, three connected sets, that is, a connected set 201 on the lower side, a connected set 202 on the upper side, and a connected set 203 near the center are illustrated, and the connected set 203 is a singleton.

Preferred channel allocation conditions are determined in units of this connected set. This is because in a case where adjacent license areas have to be considered in channel allocation, license areas that need to be considered are included in the same connected set.

For each connected set, a minimum number of continuous channels in the connected set is determined. The minimum number of continuous channels is a minimum value of the number of continuous channels in each area included in the connected set. The number of continuous channels means the number of channels whose numbers are continuous among the channels allocated to the same PAL holder in the license area.

For example, when CH2, CH3, and CH5 are allocated, because CH2 and CH3 are continuous, the number of continuous channels is two. Furthermore, for example, in a case where the minimum number of continuous channels is two or more in the first connected set of the first PAL holder, at least two channels are allocated to the first PAL holder in each license area included in the first connected set, and the allocated channels preferably include continuous channels.

In principle, the minimum number of continuous channels in the connected set is the same as the minimum value of the number of PALs held in the license area in the connected set. For example, in a case of the connected set 201 in Fig. 9, the minimum value of the number of PALs held of each node in the connected set 201 is two. Therefore, the minimum number of continuous channels of the connected set 201 is set to two.

Since the minimum number of continuous channels of the connected set 201 is determined to be two, all the channels (that is, two channels) are allocated to be continuous in the license area 301 in the connected set 201. However, in the license areas 302, 303, and 304 in which the number of PALs held is equal to or greater than three, two channels are allocated so as to be continuous, but the remaining channels may be continuous or may not be continuous. That is, whether or not the remaining channels are continuous is not ensured.

As described above, a channel whose continuity is not ensured is referred to as a non-ensured channel for convenience. For example, the license areas 302 and 303 in Fig. 9 have two non-ensured channels, and the license area 304 has one non-ensured channel.

As described above, the minimum number of continuous channels and the non-ensured number of channels are specified for each connected set.

Moreover, license areas included in the connected set may be classified into finer sets. As a result, the number of license areas to which the identical and continuous channels can be allocated can be increased as much as possible.

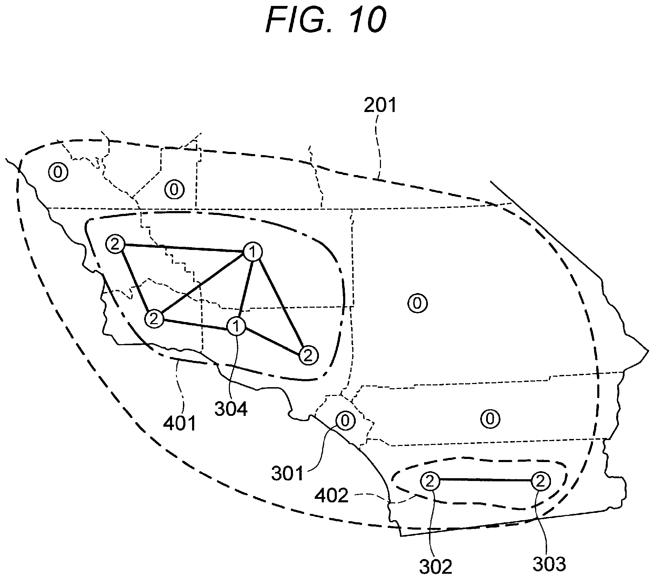

The license area included in each connected set is classified on the basis of the number of non-ensured channels of each connected set. Fig. 10 is a diagram illustrating further classification in a connected set. In Fig. 10, the number in the node in the connected set indicates the number of PALs held, but here, indicates the number of non-ensured channels. The number in the node of Fig. 10 can also be said to be the number in the node of Fig. 9 minus the minimum number of continuous channels of the connected set.

As similar to the generation of the connected set, the node having a number in the node of 0 is assumed to not exist, and nodes having a number of equal to or greater than one in the nodes are connected by an edge. It may be considered that the edge of the node having the number 0 in the node is deleted. As a result, the set of nodes connected by edges in Fig. 10 is smaller than the connected set in Fig. 9. The set in Fig. 10 is referred to as a sub-connected set. In Fig. 10, a sub-connected set 401 and a sub-connected set 402 are illustrated.

In the sub connected set, the minimum number of continuous channels and the number of non-ensured channels are specified similarly to the connected set. That is, the minimum number of continuous channels and the number of non-ensured channels in the sub-connected set are determined, and the condition commonly allocated to the nodes included in the sub-connected set is determined.

For example, in the sub-connected set 402, the minimum number of continuous channels is two. Therefore, in the sub-connected set 402, the remaining channels that are determined not to be continuous in the connected set 201 are continuous. That is, it is not ensured that different pairs such as a pair of CH1 and CH2 and a pair of CH5 and CH6 are continuous, but channels forming a pair are continuous. Note that there may be a case where different pairs such as a pair of CH1 and CH2 and a pair of CH3 and CH4 are continuous.

Note that the same operation may be repeated to generate a smaller set. That is, the operation of classifying into a fine set may be repeated until the set includes only singletons.

This operation is performed on the maps of all PAL holders. As described above, the preferred allocation conditions of all PAL holders are determined.

After the allocation condition is decided, the channel is allocated so as to satisfy the allocation condition as much as possible. Various methods are conceivable for channel allocation. For example, the computer may search for an allocation method that satisfies the allocation condition as much as possible. However, in this method, the load on the computer increases as the search condition increases. Therefore, the channel allocation pattern satisfying the allocation condition may be narrowed down from the channel allocation pattern related to the predetermined channel.

A method of narrowing a channel allocation pattern related to a predetermined channel will be described. First, a license pattern indicating a combination of the number of licenses of the PAL holder per license area is prepared.

The table below shows examples of license patterns. In the table below, the license patterns in a case where all the seven PALs are bid off is illustrated, but a license pattern in a case where all the seven PALs are not bid off is also prepared.

**[Table 5]**

| NO | Num of Holders | NUMBER OF PAL HELD PER RANK | | | | | | |
|---|---|---|---|---|---|---|---|---|
| | | FIRST | SECOND | THIRD | FOURTH | FIFTH | SIXTH | SEVENTH |
| 1 | 2 | 4 | 3 | | | | | |
| 2 | 3 | 4 | 2 | 1 | | | | |
| 3 | 4 | 4 | 1 | 1 | 1 | | | |
| 4 | 3 | 3 | 3 | 1 | | | | |
| 5 | 3 | 3 | 2 | 2 | 1 | | | |
| 6 | 4 | 3 | 2 | 1 | 1 | | | |
| 7 | 5 | 3 | 1 | 1 | 1 | 1 | | |
| 8 | 4 | 2 | 2 | 2 | 1 | | | |
| 9 | 5 | 2 | 2 | 1 | 1 | 1 | | |
| 10 | 6 | 2 | 1 | 1 | 1 | 1 | 1 | |
| 11 | 7 | 1 | 1 | 1 | 1 | 1 | 1 | 1 |

In this table, the number of PAL holders and the number of PALs held by each of the PAL holders are described as a license pattern. The second column shows the number of PAL holders. Furthermore, PAL holders are ranked according to the number of PALs held, and the number of PALs held by each rank PAL holder is shown in the third to ninth columns. Note that even if the number of PALs held is the same, the ranks are divided. One row in the table corresponds to one license pattern. For example, the license pattern of NO. 2 indicates that the three PAL holders share all the PALs, and the number of PALs held by the three PAL holders is four, two, and one, respectively. As shown in the table described above, in a case where all seven PALs are bid off, there are eleven license patterns.

For each license area, the actual PAL holder may of course vary, but in a case where all seven PALs are bid off, there are logically only the eleven license patterns described above.

A channel allocation pattern is created for each of the eleven license patterns described above. The channel allocation pattern indicates a combination of PAL holders that may be allocated to each channel of one license area.

As described above, since the total number of PAL holders per license area is at most seven, the maximum number of PALs that can be held per PAL holder is four, and the total number of channels is ten, it is possible to determine the channel allocation pattern in advance.

However, the number of channel allocation patterns is very large. Therefore, a constraint condition may be provided to reduce the number of channel allocation patterns and reduce the load of calculation. For example, as described above, there is a regulation of providing three empty channels in each license area, but it is conceivable to fix the positions of the empty channels uniformly in all the license areas. As a fixing method, for example, the following proposal is conceivable.
- Select and fix empty channel at random before channel allocation pattern creation
- Fix three channels with lower frequency band as empty channels
- Fix three channels with upper frequency band as empty channels
- Fix empty channel to be guard channel between PAL holders

For example, the empty channel is not normally available, but is preferably fixed to a continuous channel as much as possible because it is used as a backup. Furthermore, in the CBRS, it is preferable to set any three of the five channels with lower frequencies as empty channels. This is because, in the CBRS, the radar is the only target of the incumbent protection in the five channels with lower frequencies, but the number of protection targets increases in the channels with higher frequencies.

Here, a case where three channels with lower frequencies are fixed as empty channels will be described as an example. In this case, the channel allocation pattern of the license area in which the number of PAL holders is two is as shown in the table below.

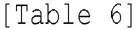

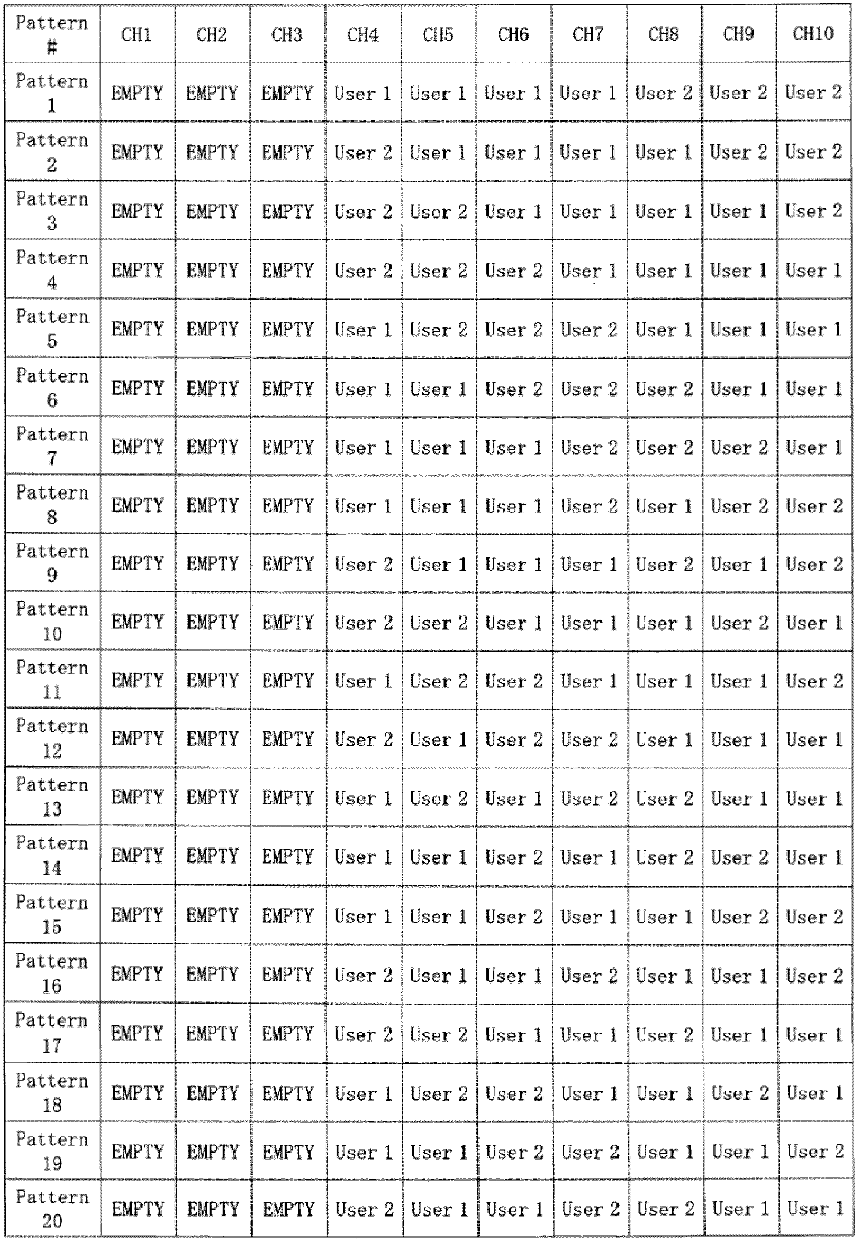

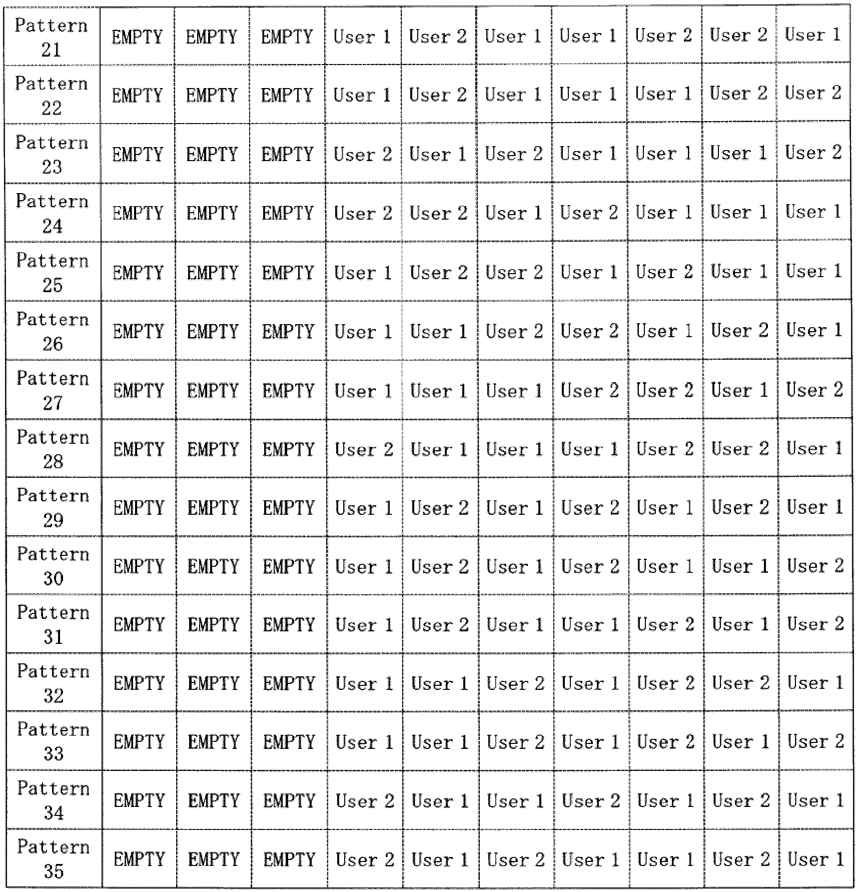

In a case where the license area whose number of PAL holders is two is included in the connected set, the channel allocation pattern in the above table is used for the connected set. From the channel allocation patterns, a channel allocation pattern applicable to the entire connected set is narrowed down on the basis of the minimum number of continuous channels of the connected set. For example, in a case of the connected set 201 illustrated in Fig. 9, since the minimum number of continuous channels is two, channel allocation patterns other than Pattern 29 in the above table can be applied. Similarly, applicable channel allocation patterns are extracted for the connected set obtained for all PAL holders.

As described above, a channel allocation pattern that is available for each of the eleven license patterns is prepared in advance, and an applicable channel allocation pattern is selected on the basis of the license pattern of the license area.

When specification of applicable channel allocation patterns is completed for the connected set of all PAL holders, final channel allocation is performed. Since it is difficult to achieve overall optimization, it is preferable to sequentially select the PAL holder and the connected set and sequentially perform channel allocation for the selected connected set.

The order of selecting the PAL holder and the connected set may be appropriately determined. For example, it may be randomly selected. Alternatively, for example, the order may be determined on the basis of a predetermined priority criterion such as the number of PALs held by the PAL holder, the number of nodes included in the connected set, or the like.

However, it is preferable to perform channel allocation to a connected set that is not a singleton before a connected set that is a singleton. The license area of the singleton is not restricted by the allocation result of other license areas. In other words, the allocation result of the license area of the singleton may be the same as the allocation results of the other license areas. That is, for the license area of the singleton, the channel allocation can be flexibly determined only by considering the allocation circumstances of other PAL holders existing in the license area.

This will be described using the example of Fig. 9. Here, the channel allocation is determined from the connected set 201 of the first PAL holder. First, in the connected set 201, a license area for performing channel allocation first is determined. For example, it is determined that channel allocation is first performed in the license area 304. In the license area 304, the number of PAL holders is two, and the number of PALs held by the first PAL holder is three. In that case, the first PAL holder corresponds to "User 2" in the above table. Furthermore, the minimum number of continuous channels of the connected set 201 is two, and the minimum number of continuous channels of the sub-connected set including the license area is one. In that case, in the above table, there needs to be continuous (adjacent) channels in the channel indicated as User 2. From the above, in the channel allocation pattern in the above table, patterns 1 to 8, 10 to 15, 17 to 22, 24 to 28, and 32 are applicable in the license area.

Then, the connected set of the second PAL holder next to the first PAL holder is examined, and the channel allocation pattern is further narrowed down. For example, in a case where the minimum number of continuous channels of the connected set of the second PAL holder including the license area 304 (the connected set is different from the connected set 201 of the first PAL holder) is four, only a pattern in which all four channels indicated as "User 1" in the above table are continuous can be applied. That is, only patterns 1 to 4 can be applied.

Note that, in the example described above, four patterns are left as candidates, but by similarly examining the four patterns also in the adjacent license area as "initial values" of applicable channel allocation patterns in the adjacent license area, the four patterns can be further narrowed down. For example, it is assumed that Pattern 3 finally remains as a result. Since the minimum number of continuous channels of the connected set 201 is two, CH4 and CH5 are allocated to the first PAL holder in any license area included in the connected set 201.

As described above, the applicable channel allocation patterns are narrowed down for all the license areas included in the identical connected set, and the degree of freedom of selection is narrowed, so that the load of the allocation processing can be reduced.

However, applicable channel allocation patterns may not remain for all license areas included in the same connected set. However, the regulation that a common channel is allocated to each license area for the identical PAL holder and the regulation that the allocated channels are continuous are recommended regulations. Therefore, a license area that does not satisfy these regulations may be generated.

For example, the channel allocation pattern may be determined only in the license area before no applicable channel allocation pattern remains, and the recommended regulations may not be satisfied in the remaining license areas. For example, in a case where two channel allocation patterns remain in the examination in the first to third license areas, but no channel allocation pattern remains in the examination in the fourth license area, one channel allocation pattern may be selected from the channel allocation patterns remaining in the examination in the first to third license areas, and the selected channel allocation pattern may be applied to the fourth license area although the recommended regulation cannot be satisfied. Alternatively, a channel allocation pattern applicable to the largest number of license areas may be selected.

Furthermore, the connected set may be divided, and the channel allocation pattern may be examined in units of the divided connected sets. For example, when there is a cut edge in the connected set or the sub-connected set in a case where no applicable channel allocation pattern remains, the connected set or the sub-connected set may be divided by cutting the cut edge. Note that the cut edge means an edge in which the connected graph is divided into two when being deleted. By the division, the commonality of the channel cannot be maintained in all the license areas in the connected set or the sub-connected set before the division, but the commonality can be maintained in the classified set, so that the recommended regulations described above can be satisfied as much as possible.

Furthermore, in a case where the information of the license area in which the commonality of the channel is not required to be maintained is acquired from the PAL holder, the license area may be excluded from the connected set and the sub-connected set.

Note that, as described above, the channel allocation method described above is also applicable to other than the CBRS. In a case where the number of licenses per license area, the number of license holders, and the like are different, the channel allocation pattern and the like may change, but the concept of the allocation method is the same.

Note that the secondary channel for backup of each PAL is selected from the empty channels shown in Table 6, but the secondary channel allocation pattern may be appropriately determined for each license area without considering other license areas. Note that it is preferable that a pattern of a plurality of backup channels is set for each license area.

Furthermore, in a case where a change to the secondary channel is required in a part of the connected set, in order to maintain the identity of the channel between the license areas, the change to the secondary channel may be performed simultaneously for all grants used in the license areas included in the connected set. For example, in a case where protection for a dynamic protection area (DPA) whose implementation of protection dynamically changes is turned on, change to the secondary channel may be simultaneously performed.

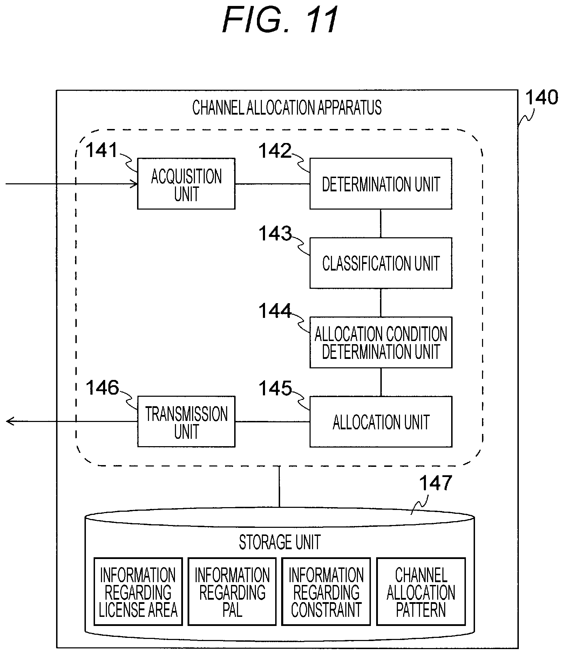

An internal configuration of an apparatus that performs the above-described channel allocation will be described. Fig. 11 is a diagram illustrating an example of an internal configuration of a channel allocation apparatus 140. The channel allocation apparatus 140 illustrated in Fig. 11 includes an acquisition unit 141, a determination unit 142142, a classification unit 143, an allocation condition determination unit 144, an allocation unit 145, a transmission unit 146, and a storage unit 147.

Note that the channel allocation can be performed by the communication control apparatus 130, the intermediate apparatus 110C, or the like in the example of Fig. 1. Furthermore, a frequency management database server such as SAS may perform channel allocation, or a broker (spectrum/license broker) related to band or license may perform channel allocation. Alternatively, an entity such as a channel allocation dedicated server may be provided. Therefore, in Fig. 11, the communication control apparatus 130, the intermediate apparatus 110C, and the like that perform channel allocation are described with different names of "channel allocation apparatus 140", and only components that perform processing related to channel allocation are described. Note that details of the arrangement on the system of the apparatus that performs channel allocation will be described later.

Note that the channel allocation apparatus 140 may include components or functions that are not illustrated or described. Furthermore, the description of the present disclosure does not exclude components or functions not illustrated or described. Furthermore, when the components of the channel allocation apparatus 140 are achieved by software (program), a circuit, or the like, the components may be achieved by being subdivided, or may be achieved collectively. For example, the storage unit 147 may include a plurality of memories or storages.

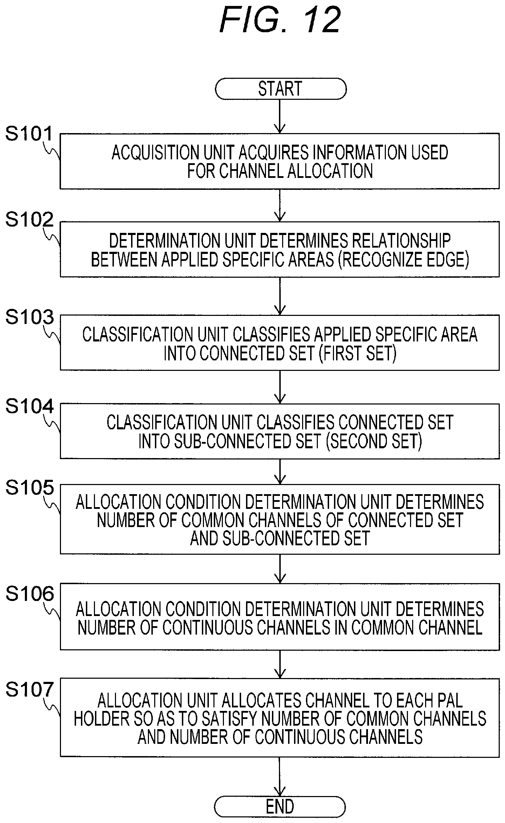

Each processing of the components will be described with reference to a flowchart. Fig. 12 is a schematic flowchart of overall processing of the channel allocation apparatus 140. Note that the flowchart of the present disclosure is an example, and it is not always necessary to perform each processing according to the disclosed flow.

The acquisition unit 141 acquires information used for channel allocation (S101). As described above, the information includes the information indicating a license area in which channel allocation is performed, information indicating a PAL holder in each license area, information indicating the number of PALs held by the PAL holder in each license area, information indicating a constraint at the time of channel allocation, information indicating a relationship between license areas, and the like.

The determination unit 142 determines the relationship between the license areas on the basis of a predetermined criterion for determining the relationship (S102). The processing corresponds to work of providing an edge connecting the license areas described above.

For example, in a case where the first license area and the second license area are adjacent to each other, it may be determined that the first license area and the second license area have a relationship. Alternatively, when the central city of the third license area exists within a certain distance from the central city of the first license area, it may be determined that the first license area and the third license area have a relationship.

Note that, in a case where the relationship between the license areas does not dynamically change, the relationship between the license areas may be determined in advance. In that case, the processing in S102 and the determination unit 142 may be omitted.

The classification unit 143 classifies the plurality of license areas into one or more connected sets (first set) on the basis of the relationship among the plurality of license areas and the number of PALs held by the PAL holder in each of the license areas (S103). The processing corresponds to the work of generating the above-described connected set. Note that the number of PALs held by the PAL holder in each license area can also be said to be the number of channels used by the PAL holder in each license area.

For example, the classification unit 143 selects one node in which the number of PALs held in the license area is equal to or greater than one, and classifies the node into a connected set A. Next, another node in which the number of PALs held in the license area is equal to or greater than one is selected, and in a case where the node has a relationship with the node classified as the connected set A, the node is classified as the connected set A, and in a case where the node has no relationship with the node classified as the connected set A, a connected set B is newly generated and the node is classified as the connected set B. By performing this operation on all the nodes in which the number of PALs held in the license area is equal to or greater than one, these nodes are classified into a plurality of connected sets.

The classification unit 143 further classifies the connected set into a finer sub-connected set (second set) on the basis of the minimum value of the number of channels held by the PAL holder in each license area included in the connected set (S104). The processing corresponds to the work of generating the sub-connected set from the connected set.

For example, in a case where the minimum value of the first connected set is two, the classification unit 143 extracts, from the first connected set, license areas whose number of channels held by the PAL holder is three or more. Then, on the basis of the relationship between the extracted license areas, the extracted license areas are classified in the similar manner to when the connected set is generated. As a result, the extracted nodes are classified into a plurality of sub-connected sets.

The allocation condition determination unit 144 determines the number of channels common to the license areas included in the connected set and the sub-connected set determined in this manner (S105). As described above, in a case where the minimum value of the number of channels in the license area included in the connected set is two, the allocation condition determination unit 144 sets the number of channels common to the license area to two, and in a case where the minimum value is three, the allocation condition determination unit 144 sets the number of channels common to the license area to three. Note that the value may be equal to or less than the minimum value depending on specifications and the like.

Then, the allocation condition determination unit 144 determines the number of continuous channels in the determined common channel (S106). As described above, in a case where the number of channels common to the license area is three, two of them may be made continuous, or all three of them may be made continuous.

As described above, the number of common channels and the number of continuous channels are determined, and the allocation unit 145 determines, for each connected set or sub-connected set, a channel to be allocated to each PAL holder in each license included in the connected set or sub-connected set so as to satisfy the number of common channels and the number of continuous channels (S107). As described above, the allocation method may be search or a method of narrowing a channel allocation pattern. As described above, a common channel is allocated to each license area included in the connected set or the sub-connected set. Furthermore, continuous channels are allocated in each license area.

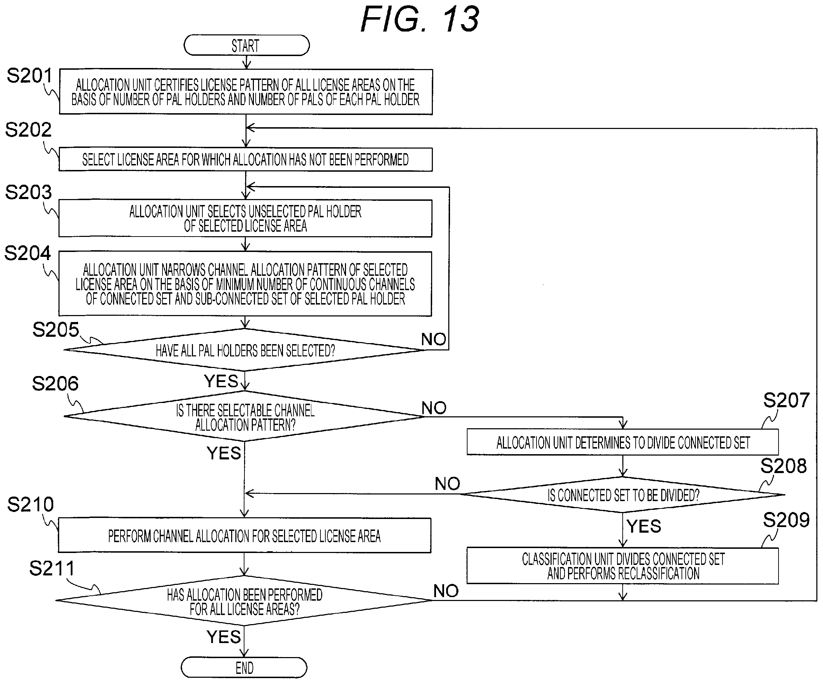

Fig. 13 is a schematic flowchart of allocation using a channel allocation pattern. It is assumed that a channel allocation pattern for each license pattern is prepared in advance.

The allocation unit 145 certifies the license pattern for all the license areas on the basis of the number of PAL holders and the number of PALs of each PAL holder (S201). The license area from which all seven PALs have been bid off (that is, the total number of PALs to be used by all PAL holders is seven) has one of the eleven license patterns described above, and the license pattern is certified on the basis of the number of PALs used by each PAL holder.

The allocation unit 145 selects a license area for which allocation has not been performed (S202). Note that it is easier to narrow down the channel allocation pattern when the license area included in the connected set and the sub-connected set of each PAL holder is preferentially selected.

In the selected license area, PAL holders that have not yet been selected are selected (S203). Then, the channel allocation pattern of the selected license area is narrowed down on the basis of the minimum number of continuous channels of the connected set and the sub-connected set of the selected PAL holder including the selected license area (S204).

After narrowing the channel allocation pattern, in a case where not all the PAL holders have been selected in the selected license area (NO in S205), the process returns to S202. In a case where all the PAL holders have been selected (YES in S205), it is confirmed whether there is a selectable channel allocation pattern.

In a case where there is no selectable channel allocation pattern (NO in S206), it is determined whether to divide the connected set (S207). For example, it is determined on the basis of whether there is a cut edge in the connected set, whether the number of license areas to which the channel has been allocated so far exceeds a threshold, and the like. It is sufficient that the condition is determined in advance. In a case where it is determined to divide the connected set (YES in S208), the classification unit 143 divides the connected set and reclassifies each license area included in the divided connected set (S209).

Specifically, the classification unit 143 detects two license areas having a direct relationship and not having an indirect relationship via other license areas included in the connected set to be divided. That is, this means that, in the graph, two nodes that are directly connected by an edge but cannot be reached via other nodes, in other words, two nodes connected by a cut edge are detected. Then, the classification unit 143 performs reclassification on the assumption that the detected two license areas do not have a direct relationship. This means that the cut edge connecting the two license areas is cut, and the license area included in the connected set before the division is assigned to the divided connected set.

As described above, the connected set in which no channel allocation pattern that is available in all the included licenses remains is divided. Then, the process returns to the selection of the license area (S202). Note that the channel allocation pattern narrowed down in the selected license area is returned to the state before the narrowing.

In a case where there is a selectable channel allocation pattern (YES in S206) and in a case where it is determined not to divide the connected set (NO in S207), a channel is allocated to the selected license area (S210). In a case where there is the selectable channel allocation pattern (YES in S206), the channel allocation pattern to be used is selected from the selectable channel allocation patterns on the basis of the allocation result of other license areas belonging to an identical connected set or sub-connected set. In a case where there is no selectable channel allocation pattern (NO in S206) and it is determined not to divide the connected set (NO in S208), a channel satisfying the recommended regulation as much as possible is allocated regardless of the channel allocation pattern.

After the channel is allocated, it is checked whether the channel allocation for all the license areas is completed, and in a case where there is a license area for which the channel allocation is not completed (NO in S211), the process returns to the selection of the license area (S202). Then, the processing described above is repeated until there is no license area for which channel allocation has not been completed, and channel allocation for each license area is performed. Then, in a case where the channel allocation is completed for all the license areas (YES in S211), this flow ends.

As described above, the allocated channel may be transmitted to an external device via the transmission unit 146. Furthermore, the processing result of each component and the allocated channel may be stored in the storage unit 147. Note that, in a case where the information regarding the PAL such as the allocated channel is stored in the storage unit 147, the storage unit 147 corresponds to the PAL database defined in WINNF-TS-0245 (Non-Patent Document 1).

Note that the channel allocation processing may be performed when the PAL database is constructed. Alternatively, for example, when a frequency management server such as SAS allocates a grant to each base station, the allocation may be dynamically performed.

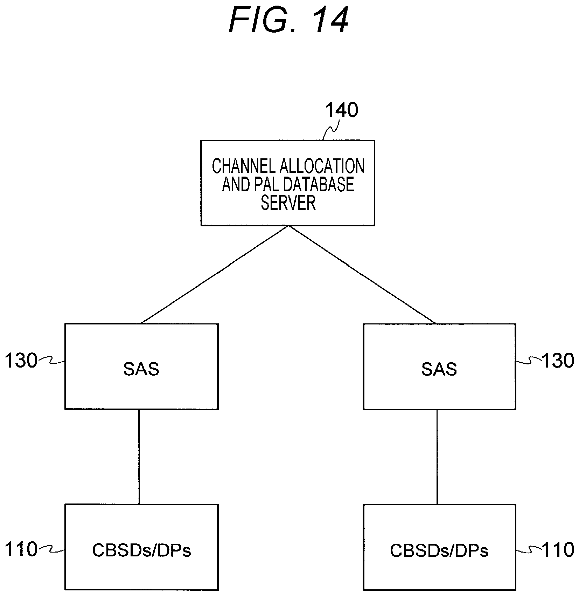

Note that, as described above, the channel allocation can be performed by the communication control apparatus 130, the intermediate apparatus 110C, or the like. Furthermore, an apparatus that performs channel allocation and an apparatus that stores a channel allocation result as a PAL database may be separated. A main arrangement example of the channel allocation apparatus 140 in the communication system will be described with reference to Figs. 14 to 16.

Note that, in Figs. 14 to 16, the roles of apparatuses such as SAS, a wireless base station (CBSDs), and a domain proxy (DPs) are illustrated. However, an apparatus corresponding to the communication control apparatus 130 illustrated in Fig. 1 is imparted with a reference numeral 130, and an apparatus corresponding to the communication terminal 110 is imparted with a reference numeral 110.

Fig. 14 is a diagram illustrating a configuration example of a network in which a channel allocation apparatus 140 exists alone. In the example of Fig. 14, a channel allocation apparatus (corresponding to a channel allocation and PAL database server in Fig. 14) 140 is provided separately from each SAS. Each SAS acquires information regarding the channel allocation of the PAL from the channel allocation apparatus 140. That is, each SAS can share information regarding the channel allocation of the PAL. Therefore, in this configuration, the allocation of the PAL grant to the wireless base station (CBSD) can be shared by a plurality of SASs.

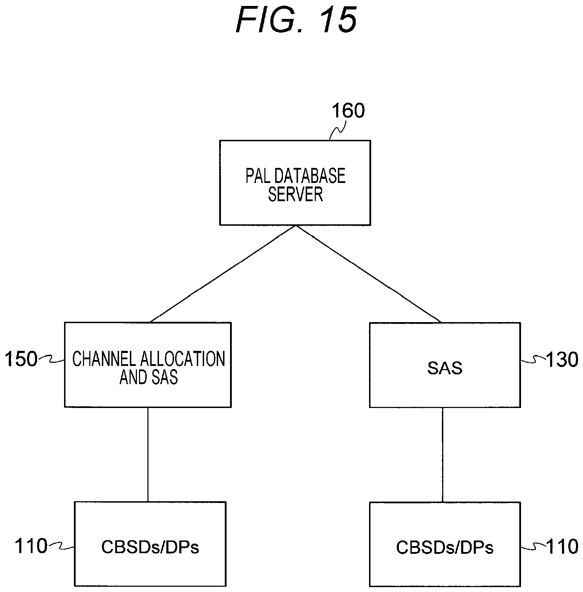

Fig. 15 is a diagram illustrating a configuration example of a network in a case where channel allocation is performed by the SAS. In the example of Fig. 15, at least one of the plurality of SASs performs channel allocation as a representative. In the example of Fig. 15, the SAS that performs channel allocation is illustrated as a channel allocation and SAS 150. The result of the channel allocation is stored by a PAL database server 160, which manages the information regarding the PAL. Then, the result of the channel allocation is transmitted from the PAL database server 160 to another SAS 130. In the example of Fig. 15, it is prevented that the inquiry from another SAS concentrates on the SAS for which the channel allocation is performed, and the original processing of the SAS is prevented.

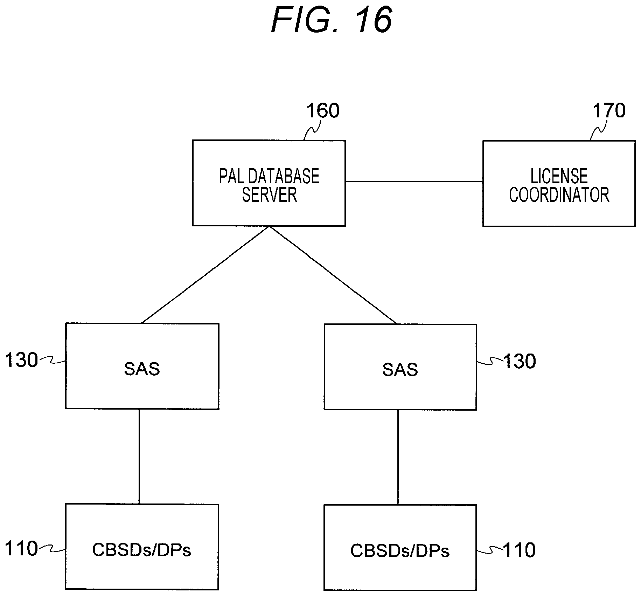

Fig. 16 is a diagram illustrating a configuration example of a network including an apparatus that performs only channel allocation. In the example of Fig. 16, an entity (that is, the server) that separately performs PAL coordination such as license leasing, channel allocation, and license coexistence (PAL-PAL coexistence) is provided, and is shown as a license coordinator 170. The result of the channel allocation performed by the entity is stored in the PAL database server 160 and transmitted to each SAS, similarly to the example of Fig. 15. In the example of Fig. 16, the tolerance to the load of the allocation processing can be made higher than in the example of Fig. 15.

The server that executes the allocation processing in this manner may be appropriately determined according to specifications or the like required for the system.

As described above, according to the present disclosure, there has been described an apparatus and the like for determining channel allocation of each area in a case where any channel within a specific frequency band is allocated to the identical user in a plurality of areas. According to the present disclosure, it is possible to achieve, in as many license areas as possible, a recommended regulation that a common channel is allocated to each license area for an identical license holder or that the allocated channels are continuous.

Note that the above-described embodiments illustrate examples for embodying the present disclosure, and the present disclosure can be implemented in various other forms. For example, various modifications, substitutions, omissions, or combinations thereof can be made without departing from the gist of the present disclosure. Such modifications, substitutions, omissions, and the like are also included in the scope of the present disclosure and are included in the invention described in the claims and the equivalent scope thereof.

Furthermore, the procedure of the processing described in the present disclosure, such as the above-described flowchart, may be regarded as a method having a series of these procedures. Alternatively, it may be regarded as a program for causing a computer to execute the series of procedures or a recording medium storing the program. The type of the recording medium does not affect the embodiment of the present disclosure, and thus is not particularly limited.

Note that, the present disclosure can also have the following configuration.
[1] A channel allocation apparatus including:
   a classification unit that classifies a plurality of areas into one or more first sets on the basis of a relationship among the plurality of areas in which a specific frequency band is available and the number of channels of the specific frequency band used by a user of the specific frequency band in each of the plurality of areas; and
   an allocation unit that determines, for each of the first sets, a channel to be allocated to the user in each of areas included in the first sets.
[2] The channel allocation apparatus according to [1],
   in which the allocation unit allocates at least one channel common to the areas included in the first sets to the user.
[3] The channel allocation apparatus according to [2],
   in which, in a case where a minimum value of the number of channels used by the user in each of the areas included in the first sets is equal to or greater than two,
   the allocation unit allocates at least two channels common to the areas included in the first sets to the user, and
   a first common channel and a second common channel which are the common channels are continuous when channels of the specific frequency band are arranged in order of allocated frequency bands.
[4] The channel allocation apparatus according to any one of [1] and [3],
   in which the classification unit further classifies the areas included in the first sets into one or more second sets on the basis of at least a minimum value of the number of channels used by the user in each of the areas included in the first sets, and
   the allocation unit determines, for each of the second sets, a channel to be allocated to the user in each of areas included in the second sets.
[5] The channel allocation apparatus according to any one of [1] to [4],
   in which the classification unit further classifies the areas included in the first sets into one or more second sets on the basis of at least a minimum value of the number of channels used by the user in each of the areas included in the first sets, and
   the allocation unit allocates, to the user, at least one channel common to areas included in the second sets separately from a channel common to the areas included in the first sets.
[6] The channel allocation apparatus according to any one of [1] to [5],
   in which the classification unit further classifies areas included in the first sets into one or more second sets on the basis of at least a minimum value of the number of channels used by the user in each of the areas included in the first sets,
   in a case where a minimum value of the number of channels used by the user in each of areas included in the second sets is two or more, the allocation unit allocates, to the user, at least two channels common to the areas included in the second sets separately from the channels common to the areas included in the first sets, and
   a third common channel and a fourth common channel which are the channels common to the areas included in the second sets are continuous when channels of the specific frequency band are arranged in order of allocated frequency bands.
[7] The channel allocation apparatus according to any one of [1] to [6],
   in which the relationship is a geographical relationship.
[8] The channel allocation apparatus according to [7],
   in which, in a case where the number of channels of the specific frequency band used by the user is equal to or greater than one in a first area and a second area that are adjacent to each other among the plurality of areas, the classification unit classifies the first area and the second area into an identical first set.
[9] The channel allocation apparatus according to [7],
   in which, in a case where a third area and a fourth area among the plurality of areas exist within a predetermined distance and the number of channels of the specific frequency band used by the user is equal to or greater than one in the third area and the fourth area, the classification unit classifies the third area and the fourth area into an identical first set.
[10] The channel allocation apparatus according to any one of [1] to [9],
   in which the allocation unit
   acquires or generates an allocation pattern of channels in the plurality of areas on the basis of at least an upper limit value of a total number of users of the specific frequency band in the plurality of areas and an upper limit value of the number of channels available to each user of the specific frequency band in the plurality of areas, and
   determines a channel to be allocated to the user in the areas included in the first sets by narrowing allocation patterns that are available in all of the areas included in the first sets.
[11] The channel allocation apparatus according to [10],
   in which, in a case where it is necessary to determine an unavailable channel in the specific frequency band, the allocation unit narrows the allocation pattern by setting the unavailable channel as a channel common to the plurality of areas and is continuous when respective channels of the specific frequency band are arranged in order of allocated frequency bands.
[12] The channel allocation apparatus according to [10],
   in which the classification unit divides the first sets in which no channel allocation pattern available in all of included areas remains into a plurality of pieces, and
   the allocation unit determines a channel to be allocated to the user in each of areas included in divided first sets by narrowing allocation patterns available in all of the areas included in the divided first sets.
[13] The channel allocation apparatus according to [12],
   in which the classification unit
   detects a fifth area and a sixth area from among areas included in the first sets, the fifth area and the sixth area having a direct relationship but not having an indirect relationship via other areas included in the first sets, and
   determines areas included in a plurality of first sets after being divided by regarding the fifth area and the sixth area as not having a direct relationship.
[14] A channel allocation method including steps of:
   classifying a plurality of areas into one or more first sets on the basis of a relationship among the plurality of areas in which a specific frequency band is available and the number of channels of the specific frequency band used by a user of the specific frequency band in each of the plurality of areas; and
   determining, for each of the first sets, a channel to be allocated to the user in each of areas included in the first sets.
[15] A computer program including steps of:
   classifying a plurality of areas into one or more first sets on the basis of a relationship among the plurality of areas in which a specific frequency band is available and the number of channels of the specific frequency band used by a user of the specific frequency band in each of the plurality of areas; and
   determining, for each of the first sets, a channel to be allocated to the user in each of areas included in the first sets.

### REFERENCE SIGNS LIST

100 Communication network
110 (110A, 110B, 110C) Communication apparatus (for example, CBSDs/DPs)
120 Terminal
130 (130A, 130B) Communication control apparatus (for example, SAS)
140 Channel allocation apparatus
141 Acquisition unit
142 Determination unit
143 Classification unit
144 Allocation condition determination unit
145 Allocation unit
146 Transmission unit
147 Storage unit
150 Channel allocation and SAS
160 PAL database server
170 License coordinator
201, 202, 203 Connected set (first set)
301, 302, 303, 304 Node (license area)
401, 402 Sub-connected set (second set)

## Claims

1. A channel allocation apparatus comprising:
a classification unit that classifies a plurality of areas into one or more first sets on a basis of a relationship among the plurality of areas in which a specific frequency band is available and the number of channels of the specific frequency band used by a user of the specific frequency band in each of the plurality of areas; and
an allocation unit that determines, for each of the first sets, a channel to be allocated to the user in each of areas included in the first sets.

2. The channel allocation apparatus according to claim 1,
wherein the allocation unit allocates at least one channel common to the areas included in the first sets to the user.

3. The channel allocation apparatus according to claim 2,
wherein, in a case where a minimum value of the number of channels used by the user in each of the areas included in the first sets is equal to or greater than two,
the allocation unit allocates at least two channels common to the areas included in the first sets to the user, and
a first common channel and a second common channel which are the common channels are continuous when channels of the specific frequency band are arranged in order of allocated frequency bands.

4. The channel allocation apparatus according to claim 1,
wherein the classification unit further classifies the areas included in the first sets into one or more second sets on a basis of at least a minimum value of the number of channels used by the user in each of the areas included in the first sets, and
the allocation unit determines, for each of the second sets, a channel to be allocated to the user in each of areas included in the second sets.

5. The channel allocation apparatus according to claim 1,
wherein the classification unit further classifies the areas included in the first sets into one or more second sets on a basis of at least a minimum value of the number of channels used by the user in each of the areas included in the first sets, and
the allocation unit allocates, to the user, at least one channel common to areas included in the second sets separately from a channel common to the areas included in the first sets.

6. The channel allocation apparatus according to claim 1,
wherein the classification unit further classifies areas included in the first sets into one or more second sets on a basis of at least a minimum value of the number of channels used by the user in each of the areas included in the first sets,
in a case where a minimum value of the number of channels used by the user in each of areas included in the second sets is two or more, the allocation unit allocates, to the user, at least two channels common to the areas included in the second sets separately from the channels common to the areas included in the first sets, and
a third common channel and a fourth common channel which are the channels common to the areas included in the second sets are continuous when channels of the specific frequency band are arranged in order of allocated frequency bands.

7. The channel allocation apparatus according to claim 1,
wherein the relationship is a geographical relationship.

8. The channel allocation apparatus according to claim 7,
wherein, in a case where the number of channels of the specific frequency band used by the user is equal to or greater than one in a first area and a second area that are adjacent to each other among the plurality of areas, the classification unit classifies the first area and the second area into an identical first set.

9. The channel allocation apparatus according to claim 7,
wherein, in a case where a third area and a fourth area among the plurality of areas exist within a predetermined distance and the number of channels of the specific frequency band used by the user is equal to or greater than one in the third area and the fourth area, the classification unit classifies the third area and the fourth area into an identical first set.

10. The channel allocation apparatus according to claim 1,
wherein the allocation unit
acquires or generates an allocation pattern of channels in the plurality of areas on a basis of at least an upper limit value of a total number of users of the specific frequency band in the plurality of areas and an upper limit value of the number of channels available to each user of the specific frequency band in the plurality of areas, and
determines a channel to be allocated to the user in the areas included in the first sets by narrowing allocation patterns that are available in all of the areas included in the first sets.

11. The channel allocation apparatus according to claim 10,
wherein, in a case where it is necessary to determine an unavailable channel in the specific frequency band, the allocation unit narrows the allocation pattern by setting the unavailable channel as a channel common to the plurality of areas and is continuous when respective channels of the specific frequency band are arranged in order of allocated frequency bands.

12. The channel allocation apparatus according to claim 10,
wherein the classification unit divides the first sets in which no allocation pattern available in all of included areas remains into a plurality of pieces, and
the allocation unit determines a channel to be allocated to the user in each of areas included in divided first sets by narrowing allocation patterns available in all of the areas included in the divided first sets.

13. The channel allocation apparatus according to claim 12,
wherein the classification unit
detects a fifth area and a sixth area from among areas included in the first sets, the fifth area and the sixth area having a direct relationship but not having an indirect relationship via other areas included in the first sets, and
determines areas included in a plurality of first sets after being divided by regarding the fifth area and the sixth area as not having a direct relationship.

14. A channel allocation method comprising steps of:
classifying a plurality of areas into one or more first sets on a basis of a relationship among the plurality of areas in which a specific frequency band is available and the number of channels of the specific frequency band used by a user of the specific frequency band in each of the plurality of areas; and
determining, for each of the first sets, a channel to be allocated to the user in each of areas included in the first sets.

15. A computer program comprising steps of:
classifying a plurality of areas into one or more first sets on a basis of a relationship among the plurality of areas in which a specific frequency band is available and the number of channels of the specific frequency band used by a user of the specific frequency band in each of the plurality of areas; and
determining, for each of the first sets, a channel to be allocated to the user in each of areas included in the first sets.
